# EUROPEAN PATENT SPECIFICATION

(11) **EP 4 161 193 B1**
(45) Date of publication and mention of the grant of the patent: **22.04.2026**
(21) Application number: 21832573.6
(22) Date of filing: 26.02.2021
(51) Int. Cl.: H04W 74/00, H04W 74/0816

(54) **INTER-SYSTEM INTERFERENCE AVOIDANCE METHOD, DEVICE AND SYSTEM**
VERFAHREN, VORRICHTUNG UND SYSTEM ZUR VERMEIDUNG VON SYSTEMÜBERGREIFENDEN INTERFERENZEN
PROCÉDÉ, DISPOSITIF ET SYSTÈME DE PROTECTION CONTRE LES INTERFÉRENCES ENTRE SYSTÈMES

(30) Priority: 30.06.2020 CN 202010607278; 25.11.2020 CN 202011340572
(43) Date of publication of application: 05.04.2023
(73) Proprietor: Huawei Technologies Co., Ltd., Longgang District Shenzhen, Guangdong 518129 (CN)
(72) Inventor: PENG, Lan, Shenzhen, Guangdong 518129 (CN); LI, Xueru, Shenzhen, Guangdong 518129 (CN); DU, Zhenguo, Shenzhen, Guangdong 518129 (CN); HUANG, Wei, Shenzhen, Guangdong 518129 (CN)
(74) Representative: Maiwald GmbH
(86) International application number: PCT/CN2021/078246
(87) International publication number: WO 2022/001144

(56) References cited:
- EP-A1- 2 443 892
- EP-A1- 3 373 484
- WO-A1-2015/109516
- CN-A- 104 185 296
- CN-A- 104 980 936
- CN-A- 105 228 191
- CN-A- 106 160 967
- CN-A- 106 658 739
- CN-A- 109 951 241
- US-A1- 2009 279 587
- US-A1- 2017 111 889
- QUALCOMM INC: "LAA coexistence scenarios", vol. RAN WG4, no. Athens, Greece; 20150209 - 20150213, 8 February 2015 (2015-02-08), XP050937714, Retrieved from the Internet <URL:http://www.3gpp.org/ftp/Meetings_3GPP_SYNC/RAN4/Docs/> [retrieved on 20150208]
- INSTITUTE FOR INFORMATION INDUSTRY (III): "Design of LAA-WiFi Hidden Terminal Mitigation", vol. RAN WG1, no. Belgrade, Serbia; 20150420 - 20150424, 19 April 2015 (2015-04-19), XP050934825, Retrieved from the Internet <URL:http://www.3gpp.org/ftp/Meetings_3GPP_SYNC/RAN1/Docs/> [retrieved on 20150419]

## Description

This application claims priority to Chinese Patent Application No. 202010607278.0, filed with the China National Intellectual Property Administration on June 30, 2020 and entitled "METHOD FOR PROVIDING AUXILIARY INFORMATION, AND UE", and Chinese Patent Application No. 202011340572.6, filed with the China National Intellectual Property Administration on November 25, 2020 and entitled "INTER-SYSTEM INTERFERENCE AVOIDANCE METHOD, DEVICE, AND SYSTEM".

### TECHNICAL FIELD

This application relates to the field of communications technologies, and in particular, to an inter-system interference avoidance method, a first device, and a chip.

### BACKGROUND

In existing communications systems, because an unlicensed spectrum is open, all the communications systems can perform communication by using the unlicensed spectrum. On a frequency band of 5 GHz, the existing communications system may include a sidelink-unlicensed (sidelink-unlicense, SL-U) system, a new radio-unlicensed (new radio-unlicensed, NR-U) system, a licensed assisted access (licensed assisted access, LAA) system, a wireless fidelity (wireless fidelity, Wi-Fi) system, and the like.

However, because a plurality of communications systems can perform communication by using the unlicensed spectrum, there is inter-system interference between the communications systems due to a channel occupation problem between different communications systems. For example, on the frequency band of 5 GHz, for the SL-U system, the LAA system has a few deployed sites due to an industry problem, and causes low interference to the SL-U system. The Wi-Fi system has high interference to the SL-U system. When the Wi-Fi system occupies a channel for a long time, the SL-U cannot run normally. Therefore, how to reduce the inter-system interference between the communications systems on the unlicensed spectrum becomes an urgent problem to be resolved.

US 2017/111889 A1 describes a method for data transmission on an unlicensed band, comprising the steps of receiving, by a UE, configuration information, the configuration information configuring a cell where the UE works on an unlicensed band, and receiving, by the UE, control information, and performing data transmission on the unlicensed band according to the control information. The method further comprises that when detecting that a wireless channel is idle, sending a wireless fidelity (WiFi) frame, and setting a duration field of the WiFi frame as a time period for reserving the wireless channel.

EP 3 373 484 A1 describes sending, by a base station if the base station detects that the base station receives the system signal on the unlicensed channel, a channel reservation signal on the unlicensed channel to reserve the unlicensed channel. Thereby, the base station performs clear channel assessment CCA if the base station detects that the base station receives the system signal on the unlicensed channel, and sends, if a detection result of the CCA is that the unlicensed channel is idle, the channel reservation signal on the unlicensed channel to reserve the unlicensed channel.

### SUMMARY

In view of this, an objective of this application is to provide an inter-system interference avoidance method, a device, and a system, to reduce inter-system interference between various communications systems on an unlicensed spectrum. The invention is set out in the appended independent claims, wherein further embodiments are set out in the appended dependent claims.

According to a first aspect, an embodiment of this application provides an inter-system interference avoidance method. The method is applied to a first device. The first device performs communication by using a first communications system. The first communications system is a sidelink-unlicensed SL-U system, a new radio-unlicensed NR-U system, or a licensed assisted access LAA system. The method includes: The first device broadcasts a wireless fidelity Wi-Fi message including duration indication information. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. The first device sends, by using the first communications system, first information including service data and/or control information to a third device.

Based on the first aspect, the first device sends, to the second device in a different system, the Wi-Fi message used to indicate the second device to skip occupying the first channel, so that the second device skips occupying the first channel after receiving the Wi-Fi message. The first device sends the first information to the third device in a same system when the second device skips occupying the first channel, to reduce inter-system interference, and improve reliability of intra-system communication.

In a possible design, the first duration is greater than or equal to transmission duration of the first information.

Based on the possible design, the first device may determine the first duration based on the transmission duration of the first information, to ensure that the second device skips occupying the first channel when the first device sends the first information to the third device, so as to reduce the inter-system interference, and improve the reliability of intra-system communication.

The first device performs channel detection and/or clear channel assessment CCA, to measure interference power. When the interference power meets a preset threshold, the first device broadcasts the Wi-Fi message.

Based on this, the first device broadcasts the Wi-Fi message when the interference power obtained through measurement meets the preset threshold, so that the first device can be prevented from frequently broadcasting the Wi-Fi message. This ensures that the first communications system and the second communications system can run normally while reducing the inter-system interference, and can also reduce power consumption of the first device.

In a possible design, the first information is further used to indicate the first device to broadcast the Wi-Fi message.

Based on the possible design, the first device sends, to the third device, the first information used to indicate the first device to broadcast the Wi-Fi message, to indicate to the third device that the first device has broadcast the Wi-Fi message used to indicate to skip occupying the first channel. Therefore, when the second device in the different system skips occupying the first channel, the third device communicates with a device in a same system, to improve the reliability of intra-system communication.

In a possible design, the first information is used to indicate a time-frequency resource of the Wi-Fi message.

Based on the possible design, the first device indicates the time-frequency resource of the Wi-Fi message to the third device, so that when measuring interference power, the third device can eliminate, based on the time-frequency resource, interference power corresponding to the Wi-Fi message, to improve accuracy of interference power determined by the third device.

In a possible design, after the first device broadcasts the Wi-Fi message, the first device sends the first information to the third device after first reserved duration.

Based on the possible design, the first device may send, after broadcasting the Wi-Fi message, the first information to the third device after the first reserved duration, to ensure that the first device sends the first information to the third device after the second device receives the Wi-Fi message and skips occupying the first channel, so as to reduce the inter-system interference, and improve the reliability of intra-system communication.

In a possible design, the first reserved duration is greater than or equal to a sum of transmission duration of the Wi-Fi message and a first switching delay. The first switching delay is a delay needed for the first device to switch from broadcasting the Wi-Fi message to sending the first information.

Based on the possible design, the first reserved duration may be greater than or equal to the sum of the transmission duration of the Wi-Fi message and the first switching delay. This provides a feasible solution for the first device to determine the first reserved duration.

In a possible design, after the first device determines to broadcast the Wi-Fi message, the first device sends the Wi-Fi message to the second device after second reserved duration.

In a possible design, the second reserved duration is greater than or equal to a second switching delay. The second switching delay is a delay needed for the first device to switch to sending the Wi-Fi message.

Based on the foregoing two possible designs, after determining that the Wi-Fi message needs to be broadcast, the first device may broadcast the Wi-Fi message after the second reserved duration. This ensures that the first device sends the Wi-Fi message after scheduling of a resource required for sending the Wi-Fi message is completed, thereby improving a success rate of sending the Wi-Fi message.

According to a non-claimed second aspect, an embodiment of this application provides a first device. The first device may implement a function performed by the first device in the foregoing first aspect or the possible designs of the first aspect. The function may be implemented by hardware executing corresponding software. The hardware or the software includes one or more modules corresponding to the foregoing function, for example, a transceiver module. The transceiver module is configured to broadcast a wireless fidelity Wi-Fi message including duration indication information. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. The transceiver module is further configured to send, by using a first communications system, first information including service data and/or control information to a third device.

For a specific implementation of the first device, refer to a behavior function of the first device in the inter-system interference avoidance method according to the first aspect or any one of the possible designs of the first aspect. Based on the first device according to the second aspect, the first device sends, to the second device in a different system, the Wi-Fi message used to indicate the second device to skip occupying the first channel, so that the second device skips occupying the first channel after receiving the Wi-Fi message. The first device sends the first information to the third device in a same system when the second device skips occupying the first channel, to reduce inter-system interference, and improve reliability of intra-system communication.

In a possible design, the first duration is greater than or equal to transmission duration of the first information.

Based on the possible design, the first device may determine the first duration based on the transmission duration of the first information, to ensure that the second device skips occupying the first channel when the first device sends the first information to the third device, so as to reduce the inter-system interference, and improve the reliability of intra-system communication.

In a possible design, the first device further includes a processing module. The processing module is configured to perform channel detection and/or clear channel assessment CCA, to measure interference power. When the interference power meets a preset threshold, the transceiver module broadcasts the Wi-Fi message.

Based on the possible design, the first device broadcasts the Wi-Fi message when the interference power obtained through measurement meets the preset threshold, so that the first device can be prevented from frequently broadcasting the Wi-Fi message. This ensures that the first communications system and the second communications system can run normally while reducing the inter-system interference, and can also reduce power consumption of the first device.

In a possible design, the first information is further used to indicate the first device to broadcast the Wi-Fi message.

Based on the possible design, the first device sends, to the third device, the first information used to indicate the first device to broadcast the Wi-Fi message, to indicate to the third device that the first device has broadcast the Wi-Fi message used to indicate to skip occupying the first channel. Therefore, when the second device in the different system skips occupying the first channel, the third device communicates with a device in a same system, to improve the reliability of intra-system communication.

In a possible design, the first information is used to indicate a time-frequency resource of the Wi-Fi message.

Based on the possible design, the first device indicates the time-frequency resource of the Wi-Fi message to the third device, so that when measuring interference power, the third device can eliminate, based on the time-frequency resource, interference power corresponding to the Wi-Fi message, to improve accuracy of interference power determined by the third device.

In a possible design, the transceiver module is further configured to: after broadcasting the Wi-Fi message, send the first information to the third device after first reserved duration.

Based on the possible design, the first device may send, after broadcasting the Wi-Fi message, the first information to the third device after the first reserved duration, to ensure that the first device sends the first information to the third device after the second device receives the Wi-Fi message and skips occupying the first channel, so as to reduce the inter-system interference, and improve the reliability of intra-system communication.

In a possible design, the first reserved duration is greater than or equal to a sum of transmission duration of the Wi-Fi message and a first switching delay. The first switching delay is a delay needed for the first device to switch from broadcasting the Wi-Fi message to sending the first information.

Based on the possible design, the first reserved duration may be greater than or equal to the sum of the transmission duration of the Wi-Fi message and the first switching delay. This provides a feasible solution for the first device to determine the first reserved duration.

In a possible design, after the processing module determines to broadcast the Wi-Fi message, the transceiver module sends the Wi-Fi message to the second device after second reserved duration.

In a possible design, the second reserved duration is greater than or equal to a second switching delay. The second switching delay is a delay needed for the first device to switch to sending the Wi-Fi message.

Based on the foregoing two possible designs, after determining that the Wi-Fi message needs to be broadcast, the first device may broadcast the Wi-Fi message after the second reserved duration. This ensures that the first device sends the Wi-Fi message after scheduling of a resource required for sending the Wi-Fi message is completed, thereby improving a success rate of sending the Wi-Fi message.

According to a third aspect, an embodiment of this application provides a first device. The first device may be a first device or a chip or a system-on-a-chip in a first device. The first device may implement a function performed by the first device in the foregoing aspects or possible designs, and the function may be implemented by hardware. In a possible design, the first device may include a transceiver. The transceiver may be configured to support the first device in implementing the function in the foregoing first aspect or any one of the possible designs of the first aspect. For example, the transceiver may be configured to broadcast a wireless fidelity Wi-Fi message including duration indication information. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. The transceiver may be further configured to send, by using a first communications system, first information including service data and/or control information to a third device. In another possible design, the first device may further include a processor and a memory. The memory is configured to store computer-executable instructions and data that are necessary for the first device. When the first device runs, the transceiver and the processor execute the computer-executable instructions stored in the memory, so that the first device is enabled to perform the inter-system interference avoidance method according to the foregoing first aspect or any one of the possible designs of the first aspect.

For a specific implementation of the first device, refer to a behavior function of the first device in the inter-system interference avoidance method according to the first aspect or any one of the possible designs of the first aspect.

According to a fourth aspect, an embodiment of this application provides an inter-system interference avoidance method. The method includes: A second device obtains a Wi-Fi message that is from a first device and that includes duration indication information. The second device is a device that performs communication by using a Wi-Fi system. The first device performs communication by using a first communications system. The first communications system is a sidelink-unlicensed SL-U system, a new radio-unlicensed NR-U system, or a licensed assisted access LAA system. The duration indication information is used to indicate first duration. The first duration is used to indicate the second device to skip occupying a first channel within the first duration. A spectrum on which the first channel is located is an unlicensed spectrum. The second device skips occupying the first channel within the first duration based on the Wi-Fi message.

Based on the fourth aspect, the second device skips occupying the first channel based on the Wi-Fi message broadcast by the first device in a different system, so that when the second device skips occupying the first channel, the first device can send first information to a third device located in a same system as the first device, to reduce inter-system interference, and improve reliability of intra-system communication.

According to a non-claimed fifth aspect, an embodiment of this application provides a second device. The second device may implement a function performed by the second device in the foregoing fourth aspect or possible designs of the fourth aspect. The function may be implemented by hardware executing corresponding software. The hardware or the software includes one or more modules corresponding to the foregoing function, for example, a transceiver module and a processing module. The transceiver module is configured to obtain a Wi-Fi message that is from a first device and that includes duration indication information. The second device is a device that performs communication by using a Wi-Fi system. The first device performs communication by using a first communications system. The first communications system is a sidelink-unlicensed SL-U system, a new radio-unlicensed NR-U system, or a licensed assisted access LAA system. The duration indication information is used to indicate first duration. The first duration is used to indicate the second device to skip occupying a first channel within the first duration. A spectrum on which the first channel is located is an unlicensed spectrum. The processing module is configured to skip occupying the first channel within the first duration based on the Wi-Fi message.

For a specific implementation of the second device, refer to a behavior function of the second device in the inter-system interference avoidance method according to the fourth aspect or any one of the possible designs of the fourth aspect. Based on the second device according to the fifth aspect, the second device skips occupying the first channel based on the Wi-Fi message broadcast by the first device in a different system, so that when the second device skips occupying the first channel, the first device can send first information to a third device located in a same system as the first device, to reduce inter-system interference, and improve reliability of intra-system communication.

It should be noted that, for related descriptions of the Wi-Fi message in the fourth aspect and the fifth aspect, refer to the specific descriptions of the Wi-Fi message in the foregoing first aspect and the second aspect. Details are not described again.

According to a non-claimed sixth aspect, an embodiment of this application provides a second device. The second device may be a second device or a chip or a system-on-a-chip in a second device. The second device may implement a function performed by the second device in the foregoing aspects or possible designs, and the function may be implemented by hardware. In a possible design, the second device may include a transceiver and a processor. The transceiver and the processor may be configured to support the second device in implementing the function in the foregoing fourth aspect or any one of the possible designs of the fourth aspect. For example, the transceiver module may be configured to obtain a Wi-Fi message that is from a first device and that includes duration indication information. The second device is a device that performs communication by using a Wi-Fi system. The first device performs communication by using a first communications system. The first communications system is a sidelink-unlicensed SL-U system, a new radio-unlicensed NR-U system, or a licensed assisted access LAA system. The duration indication information is used to indicate first duration. The first duration is used to indicate the second device to skip occupying a first channel within the first duration. A spectrum on which the first channel is located is an unlicensed spectrum. The processor may be configured to skip occupying the first channel within the first duration based on the Wi-Fi message. In another possible design, the second device may further include a memory. The memory is configured to store computer-executable instructions and data that are necessary for the second device. When the second device runs, the transceiver and the processor execute the computer-executable instructions stored in the memory, so that the second device is enabled to perform the inter-system interference avoidance method according to the foregoing fourth aspect or any one of the possible designs of the fourth aspect.

For a specific implementation of the second device, refer to a behavior function of the second device in the inter-system interference avoidance method according to the fourth aspect or any one of the possible designs of the fourth aspect.

According to a non-claimed seventh aspect, an embodiment of this application provides an inter-system interference avoidance method. The method includes: After a first device broadcasts a Wi-Fi message including duration indication information, a third device receives first information that is sent by the first device by using a first communications system and that includes service data and/or control information. The first device performs communication by using the first communications system. The first communications system is a sidelink-unlicensed SL-U system, a new radio-unlicensed NR-U system, or a licensed assisted access LAA system. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system.

Based on the seventh aspect, the first device sends the first information to the third device after broadcasting the Wi-Fi message used to indicate the second device to skip occupying the first channel, so that the first device can send the first information to the third device when the second device skips occupying the first channel, to reduce inter-system interference, and improve reliability of intra-system communication.

In a possible design, the third device determines, based on the first information, interference power corresponding to the third device. The interference power corresponding to the third device is a difference between initial interference power determined when the third device performs channel detection and/or clear channel assessment CCA and interference power corresponding to the Wi-Fi message.

Based on the possible design, the third device eliminates the interference power corresponding to the Wi-Fi message when determining the interference power corresponding to the third device, to improve accuracy of interference power determined by the third device.

According to a non-claimed eighth aspect, an embodiment of this application provides a third device. The third device may implement a function performed by the third device in the foregoing seventh aspect or possible designs of the seventh aspect. The function may be implemented by hardware executing corresponding software. The hardware or the software includes one or more modules corresponding to the foregoing function, for example, a transceiver module. The transceiver module is configured to: after a first device broadcasts a Wi-Fi message including duration indication information, receive first information that is sent by the first device by using a first communications system and that includes service data and/or control information. The first device performs communication by using the first communications system. The first communications system is a sidelink-unlicensed SL-U system, a new radio-unlicensed NR-U system, or a licensed assisted access LAA system. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system.

For a specific implementation of the third device, refer to a behavior function of the third device in the inter-system interference avoidance method according to the seventh aspect or any one of the possible designs of the seventh aspect. Based on the third device according to the eighth aspect, the first device sends the first information to the third device after broadcasting the Wi-Fi message used to indicate the second device to skip occupying the first channel, so that the first device can send the first information to the third device when the second device skips occupying the first channel, to reduce inter-system interference, and improve reliability of intra-system communication.

In a possible design, the third device further includes a processing module. The processing module is configured to determine, based on the first information, interference power corresponding to the third device. The interference power corresponding to the third device is a difference between initial interference power determined when the third device performs channel detection and/or clear channel assessment CCA and interference power corresponding to the Wi-Fi message.

Based on the possible design, the third device eliminates the interference power corresponding to the Wi-Fi message when determining the interference power corresponding to the third device, to improve accuracy of interference power determined by the third device.

It should be noted that, for related descriptions of the Wi-Fi message in the seventh aspect and the eighth aspect, refer to the specific descriptions of the Wi-Fi message in the foregoing first aspect and the second aspect. Details are not described again.

According to a non-claimed ninth aspect, an embodiment of this application provides a third device. The third device may be a third device or a chip or a system-on-a-chip in a third device. The third device may implement a function performed by the third device in the foregoing aspects or possible designs, and the function may be implemented by hardware. In a possible design, the third device may include a transceiver. The transceiver may be configured to support the third device in implementing the function in the foregoing seventh aspect or any one of the possible designs of the seventh aspect. For example, the transceiver may be configured to: after a first device broadcasts a Wi-Fi message including duration indication information, receive first information that is sent by the first device by using a first communications system and that includes service data and/or control information. The first device performs communication by using the first communications system. The first communications system is a sidelink-unlicensed SL-U system, a new radio-unlicensed NR-U system, or a licensed assisted access LAA system. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. In another possible design, the third device may further include a processor and a memory. The memory is configured to store computer-executable instructions and data that are necessary for the third device. When the third device runs, the transceiver and the processor execute the computer-executable instructions stored in the memory, so that the third device is enabled to perform the inter-system interference avoidance method according to the foregoing seventh aspect or any one of the possible designs of the seventh aspect.

For a specific implementation of the third device, refer to a behavior function of the third device in the inter-system interference avoidance method according to the seventh aspect or any one of the possible designs of the seventh aspect.

According to a non-claimed tenth aspect, a communication device is provided. The communication device includes one or more processors and one or more memories. The one or more memories are coupled to the one or more processors, and the one or more memories are configured to store computer program code or computer instructions. When the one or more processors execute the computer instructions, the communication device is enabled to perform the inter-system interference avoidance method according to the first aspect or any one of the possible designs of the first aspect, or perform the inter-system interference avoidance method according to the fourth aspect or any one of the possible designs of the fourth aspect, or perform the inter-system interference avoidance method according to the seventh aspect or any one of the possible designs of the seventh aspect.

According to a non-claimed eleventh aspect, a computer-readable storage medium is provided. The computer-readable storage medium stores computer instructions or a program. When the computer instructions or the program is run on a computer, the computer is enabled to perform the inter-system interference avoidance method according to the first aspect or any one of the possible designs of the first aspect, or perform the inter-system interference avoidance method according to the fourth aspect or any one of the possible designs of the fourth aspect, or perform the inter-system interference avoidance method according to the seventh aspect or any one of the possible designs of the seventh aspect.

According to a non-claimed twelfth aspect, a computer program product including instructions is provided. When the computer program product runs on a computer, the computer is enabled to perform the inter-system interference avoidance method according to the first aspect or any one of the possible designs of the first aspect, or perform the inter-system interference avoidance method according to the fourth aspect or any one of the possible designs of the fourth aspect, or perform the inter-system interference avoidance method according to the seventh aspect or any one of the possible designs of the seventh aspect.

According to a thirteenth aspect, a chip is provided. The chip includes a logic circuit and a communication interface. The communication interface is coupled to the logic circuit, and the logic circuit is configured to read instructions, to enable the chip to perform the inter-system interference avoidance method according to the first aspect or any one of the possible designs of the first aspect, or perform the inter-system interference avoidance method according to the fourth aspect or any one of the possible designs of the fourth aspect, or perform the inter-system interference avoidance method according to the seventh aspect or any one of the possible designs of the seventh aspect. The communication interface is configured to communicate with another module other than the chip.

For a technical effect brought by any design manner in the tenth aspect to the thirteenth aspect, refer to the technical effect brought by any possible design in the foregoing first aspect to the second aspect, or refer to the technical effect brought by any possible design in the foregoing fourth aspect to the fifth aspect, or refer to the technical effect brought by any possible design in the foregoing seventh aspect to the eighth aspect. Details are not described again.

According to a non-claimed fourteenth aspect, a communications system is provided. The communications system includes the first device according to any one of the second aspect and the third aspect, the second device according to any one of the fifth aspect and the sixth aspect, and the third device according to any one of the eighth aspect and the ninth aspect.

In the following description, the invention is described with particular reference to figures 3, 9 and 13, while the description of the remaining figures is provided for illustrative purposes for a better understanding of the invention.

### BRIEF DESCRIPTION OF DRAWINGS

FIG. 1a is a schematic diagram of occupying an unlicensed spectrum by an LAA system on a frequency band of 5 GHz according to an embodiment of this application;
FIG. 1b is another schematic diagram of occupying an unlicensed spectrum by an LAA system on a frequency band of 5 GHz according to an embodiment of this application;
FIG. 1c is still another schematic diagram of occupying an unlicensed spectrum by an LAA system on a frequency band of 5 GHz according to an embodiment of this application;
FIG. 1d is a schematic diagram of occupying an unlicensed spectrum by a Wi-Fi system on a frequency band of 5 GHz according to an embodiment of this application;
FIG. 1e is a schematic diagram of occupying a channel by a Wi-Fi system on a frequency band of 2.4 GHz according to an embodiment of this application;
FIG. 1f is a schematic composition diagram of a communications system according to an embodiment of this application;
FIG. 2 is a schematic diagram of a communication device according to an embodiment of this application;
FIG. 3 is a flowchart of an inter-system interference avoidance method according to an embodiment of this application;
FIG. 4 is a schematic diagram of a frame structure of a Wi-Fi message according to an embodiment of this application;
FIG. 5 is a schematic diagram of a frame structure of a physical header according to an embodiment of this application;
FIG. 6 is a schematic diagram of a frame structure of a CTS frame according to an embodiment of this application;
FIG. 7 is a schematic diagram of a frame structure of another physical header according to an embodiment of this application;
FIG. 8 is a schematic diagram of a frame structure of an L-SIG field according to an embodiment of this application;
FIG. 9 is a flowchart of another inter-system interference avoidance method according to an embodiment of this application;
FIG. 10 is a schematic diagram of information transmission according to an embodiment of this application;
FIG. 11 is a schematic diagram of a frame structure of first reserved duration according to an embodiment of this application;
FIG. 12 is a schematic diagram of information receiving according to an embodiment of this application;
FIG. 13 is a schematic composition diagram of a first device according to an embodiment of this application;
FIG. 14 is a schematic composition diagram of a second device according to an embodiment of this application; and
FIG. 15 is a schematic composition diagram of a third device according to an embodiment of this application.

### DESCRIPTION OF EMBODIMENTS

Before embodiments of this application are described, technical terms used in embodiments of this application are described.

An unlicensed spectrum is an open spectrum, and all communications systems can perform communication by using the unlicensed spectrum.

Specifically, communications systems such as a sidelink-unlicensed (sidelink-unlicense, SL-U) system, a new radio-unlicensed (new radio-unlicense, NR-U) system, a licensed assisted access (licensed assisted access, LAA) system, a wireless fidelity (wireless fidelity, Wi-Fi) system, and a Bluetooth system may perform communication by using the unlicensed spectrum.

The LAA system may include a fixed wireless access (fixed wireless access, FWA) system, an intelligent transportation system (intelligent transportation system, ITS), and a radio local area network (radio local area network, RLAN).

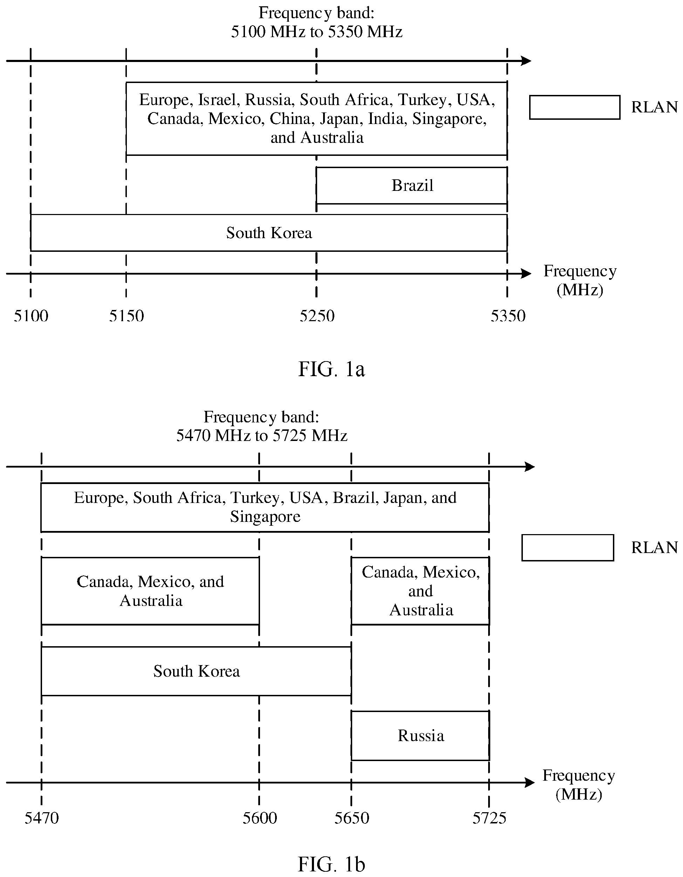

For example, that the LAA system occupies the unlicensed spectrum on a frequency band of 5 GHz may be shown in the following FIG. 1a to FIG. 1c.

As shown in FIG. 1a, for a frequency band of 5100 MHz to 5350 MHz, Europe, Israel, Russia, South Africa, Turkey, USA, Canada, Mexico, China, Japan, India, Singapore, and Australia may run an RLAN on a frequency band of 5150 MHz to 5350 MHz. Brazil may run an RLAN on a frequency band of 5250 MHz to 5350 MHz. South Korea may run an RLAN on the frequency band of 5100 MHz to 5350 MHz.

As shown in FIG. 1b, for a frequency band of 5470 MHz to 5725 MHz, Europe, South Africa, Turkey, USA, Brazil, Japan, and Singapore may run an RLAN on the frequency band of 5470 MHz to 5725 MHz. Canada, Mexico, and Australia may run an RLAN on a frequency band of 5470 MHz to 5600 MHz and on a frequency band of 5650 MHz to 5725 MHz. South Korea may run an RLAN on a frequency band of 5470 MHz to 5650 MHz. Russia may run an RLAN on the frequency band of 5650 MHz to 5725 MHz.

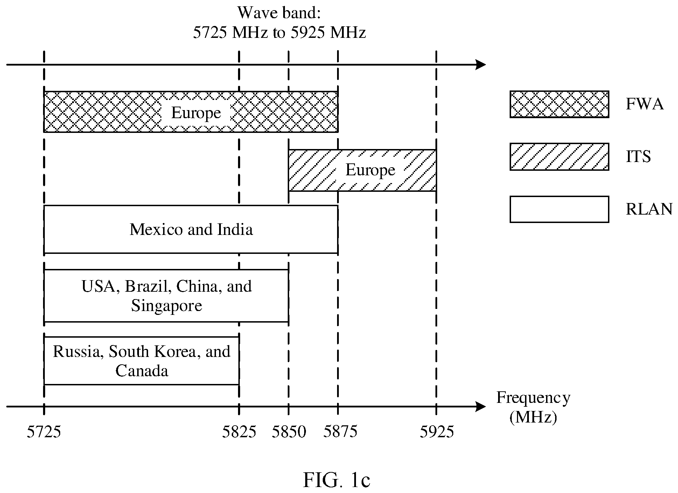

As shown in FIG. 1c, for a frequency band of 5725 MHz to 5925 MHz, Europe may run an FWA system on a frequency band of 5725 MHz to 5925 MHz, and may run an ITS on a frequency band of 5850 MHz to 5925 MHz. Mexico and India may run an RLAN on a frequency band of 5725 MHz to 5875 MHz. USA, Brazil, China, and Singapore may run an RLAN on a frequency band of 5725 MHz to 5850 MHz. Russia, South Korea, and Canada may run an RLAN on a frequency band of 5725 MHz to 5825 MHz.

The Wi-Fi system may include dynamic frequency selection (dynamic frequency selection, DFS), transmit power control (transmit power control, TPC), FWA, the ITS, long term evolution-vehicle (long term evolution-vehicle, LTE-V) test, radio positioning, earth exploration-satellite service, and the like.

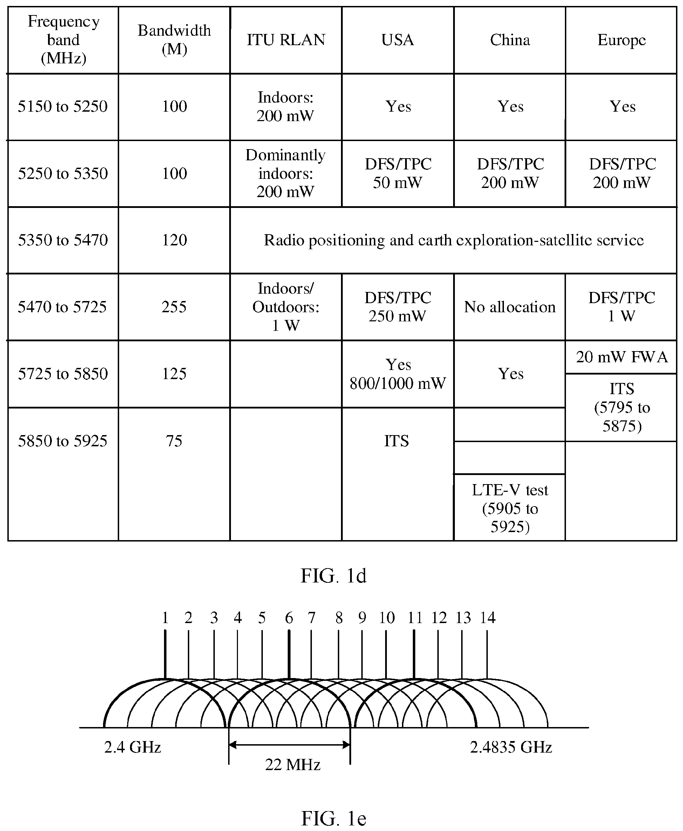

For example, that the Wi-Fi system occupies the unlicensed spectrum on a frequency band of 5 GHz may be shown in the following FIG. 1d, and that the Wi-Fi system occupies a channel on a frequency band of 2.4 GHz may be shown in the following FIG. 1e.

As shown in FIG. 1d, for a frequency band of 5150 MHz to 5350 MHz, bandwidth may be 100 MHz. For a frequency band of 5350 MHz to 5470 MHz, bandwidth may be 120 MHz. For a frequency band of 5470 MHz to 5725 MHz, bandwidth may be 225 MHz. For a frequency band of 5725 MHz to 5850 MHz, bandwidth may be 125 MHz. For a frequency band of 5850 MHz to 5925 MHz, bandwidth may be 75 MHz.

Specifically, the international telecommunication union (international telecommunication union, ITU) stipulates that power of the RLAN on a frequency band of 5150 MHz to 5250 MHz is 200 mW indoors, power on a frequency band of 5250 MHz to 5350 MHz is dominantly 200 mW indoors, radio positioning and earth exploration-satellite service are performed on the frequency band of 5350 MHz to 5470 MHz, and power on the frequency band of 5470 MHz to 5725 MHz is 1 W indoors or outdoors. USA stipulates that power of DFS/TPC is 50 mW on the frequency band of 5250 MHz to 5350 MHz, radio positioning and earth exploration-satellite service are performed on the frequency band of 5350 MHz to 5470 MHz, power of DFS/TPC is 250 mW on the frequency band of 5470 MHz to 5725 MHz, power is 800/1000 mW on the frequency band of 5725 MHz to 5850 MHz, and the ITS runs on the frequency band of 5850 MHz to 5925 MHz. China stipulates that power of DFS/TPC is 200 mW on the frequency band of 5250 MHz to 5350 MHz, radio positioning and earth exploration-satellite service are performed on the frequency band of 5350 MHz to 5470 MHz, and LTE-V test is performed on a frequency band of 5905 MHz to 5925 MHz. Europe stipulates that power of DFS/TPC is 200 mW on the frequency band of 5250 MHz to 5350 MHz, radio positioning and earth exploration-satellite service are performed on the frequency band of 5350 MHz to 5470 MHz, power of DFS/TPC is 1 W on the frequency band of 5470 MHz to 5725 MHz, power of the FWA is 20 mW on a frequency band of 5725 MHz to 5795 MHz, and the ITS runs on a frequency band of 5795 MHz to 5875 MHz.

As shown in FIG. 1e, for the frequency band of 2.4 GHz, 14 channels may be included, and each channel includes effective bandwidth of 20 MHz and quarantined enforcement bandwidth of 2 MHz, that is, bandwidth of each channel is 22 MHz. For example, for a channel 1 whose center frequency is 2412 MHz, a frequency range of the channel 1 is 2401 MHz to 2423 MHz. Adjacent channels on the frequency band of 2.4 GHz overlap with each other, and there is interference between the adjacent channels. Therefore, a non-overlapped channel may be used in networking application. For example, channels 1, 6, and 11 are selected as non-overlapped channels in China and North America, and channels 1, 7, and 13 are selected as non-overlapped channels in Europe.

Because a plurality of communications systems can perform communication by using the unlicensed spectrum, there is inter-system interference between the communications systems due to a channel occupation problem between different communications systems. For example, on the frequency band of 5 GHz, for the SL-U system, the LAA system has a few deployed sites due to an industry problem, and causes low interference to the SL-U system. The Wi-Fi system has high interference to the SL-U system. When the Wi-Fi system occupies a channel for a long time, the SL-U cannot run normally. Therefore, how to reduce the inter-system interference between the communications systems on the unlicensed spectrum becomes an urgent problem to be resolved.

To resolve this problem, an embodiment of this application provides an inter-system interference avoidance method. The method includes: A first device broadcasts a wireless fidelity Wi-Fi message. The first device performs communication by using a first communications system. The first communications system is a sidelink-unlicensed SL-U system, a new radio-unlicensed NR-U system, or a licensed assisted access LAA system. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. The first device sends, by using the first communications system, first information including service data and/or control information to a third device. In this embodiment of this application, the first device sends, to the second device in a different system, the Wi-Fi message used to indicate the second device to skip occupying the first channel, so that the second device skips occupying the first channel after receiving the Wi-Fi message. The first device sends the first information to the third device in a same system when the second device skips occupying the first channel, to reduce inter-system interference, and improve reliability of intra-system communication.

The following describes implementations of this embodiment of this application in detail with reference to accompanying drawings in this specification.

The inter-system interference avoidance method provided in this embodiment of this application may be applied to the first communications system and the second communications system. The first communications system and the second communications system may be any two of the following communications systems: a sidelink-unlicensed (sidelink-unlicense, SL-U) system, a new radio-unlicensed (new radio-unlicense, NR-U) system, a licensed assisted access (licensed assisted access, LAA) system, a wireless fidelity (wireless fidelity, Wi-Fi) system, a Bluetooth system, and the like. This is not limited.

The inter-system interference avoidance method provided in this embodiment of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), machine type communication (machine type communication, MTC), massive machine type communications (massive machine type communications, mMTC), device to device (device to device, D2D), vehicle to everything (vehicle to everything, V2X), vehicle to vehicle (vehicle to vehicle, V2V), the Internet of Things (Internet of Things, IoT), and the like. This is not limited.

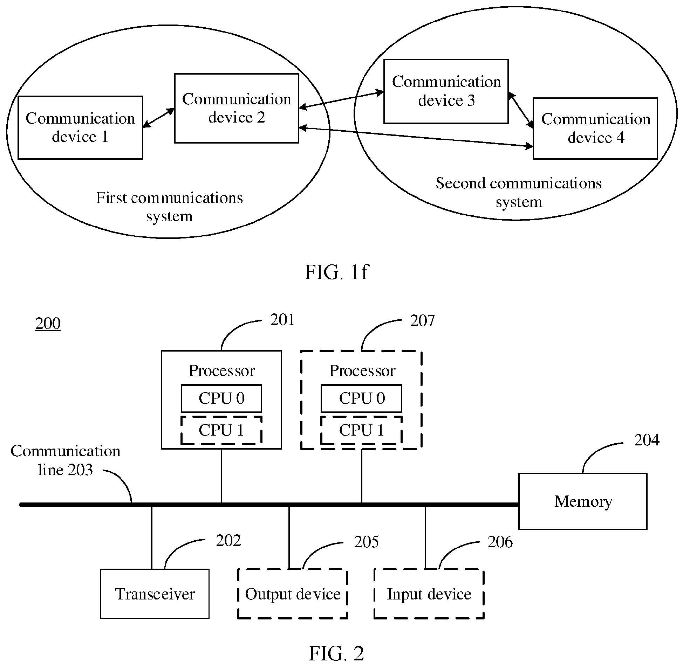

The following describes the inter-system interference avoidance method provided in this embodiment of this application by using FIG. 1f as an example.

FIG. 1f is a schematic diagram of a communications system according to an embodiment of this application. As shown in FIG. 1f, the communications system may include a first communications system and a second communications system. The first communications system may include at least one communication device. The second communications system may also include at least one communication device.

For example, the SL-U system is used as an example. A communication device in the SL-U system may perform sidelink communication or D2D communication with another communication device by using a sidelink (sidelink, SL), and send data to the another communication device on the SL, for example, send, on the SL, sidelink data to the another communication device by using a physical sidelink share channel (physical sidelink share channel, PSSCH), or send, on the SL, sidelink feedback control information (sidelink feedback control information, SFCI) corresponding to the received sidelink data to the another communication device by using a physical sidelink feedback channel (physical sidelink feedback channel, PSFCH). D2D communication may include vehicle-to-vehicle communication, vehicle-to-pedestrian communication, vehicle-to-infrastructure communication, uncrewed aerial vehicle (uncrewed aerial vehicle, UAV) to uncrewed aerial vehicle communication, and the like. This is not limited. It should be noted that in this embodiment of this application, the SL may also be referred to as a direct link, a PC5 interface link, or the like. This is not limited.

For another example, the Wi-Fi system is used as an example. A communication device in the Wi-Fi system may perform communication or D2D communication with another communication device by using a Wi-Fi link, and send data to the another communication device on the Wi-Fi link.

The communication device in FIG. 1f may be referred to as user equipment (user equipment, UE), a mobile station (mobile station, MS), a mobile terminal (mobile terminal, MT), or the like. Specifically, the communication device in FIG. 1f may be a mobile phone (mobile phone). a tablet computer, or a computer with a wireless transceiver function. Alternatively, the communication device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

During specific implementation, as shown in FIG. 1f, each communication device may use a composition structure shown in FIG. 2, or include components shown in FIG. 2. FIG. 2 is a schematic composition diagram of a communication device 200 according to an embodiment of this application. The communication device 200 may be a communication device, or a chip or a system-on-a-chip in a communication device. As shown in FIG. 2, the communication device 200 includes a processor 201, a transceiver 202, and a communication line 203.

Further, the communication device 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area network, WLAN), or the like. The transceiver 202 may be a module, a circuit, a transceiver, or any apparatus that can implement communication.

The communication line 203 is configured to transmit information between the components included in the communication apparatus 200.

The memory 204 is configured to store instructions. The instruction may be a computer program.

The memory 204 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray disc, or the like), a magnetic disk storage medium or another magnetic storage device, or the like. This is not limited.

It should be noted that the memory 204 may be independent of the processor 201, or may be integrated with the processor 201. The memory 204 may be configured to store instructions, program code, some data, or the like. The memory 204 may be located inside the communication device 200, or may be located outside the communication device 200. This is not limited. The processor 201 is configured to execute the instructions stored in the memory 204, to implement an inter-system interference avoidance method provided in the following embodiments of this application.

In an example, the processor 201 may include one or more CPUs, for example, a CPU 0 and a CPU 1 in FIG. 2.

In an optional implementation, the communication device 200 includes a plurality of processors. For example, in addition to the processor 201 in FIG. 2, the communication device 200 may further include a processor 207.

In an optional implementation, the communication device 200 further includes an output device 205 and an input device 206. For example, the input device 206 is a device, for example, a keyboard, a mouse, a microphone, or a joystick, and the output device 205 is a device, for example, a display or a speaker (speaker).

It should be noted that the communication device 200 may be a desktop computer, a laptop computer, a network server, a mobile phone, a tablet computer, a wireless terminal, an embedded device, a chip system, or a device having a structure similar to that shown in FIG. 2. In addition, the composition structure shown in FIG. 2 does not constitute a limitation on the communication device. In addition to the components shown in FIG. 2, the communication device may include more or fewer components than those shown in the figure, some components may be combined, or there may be a different component layout.

In this embodiment of this application, the chip system may include a chip, or may include a chip and another discrete component.

In addition, for actions, terms, and the like in embodiments of this application, refer to each other. This is not limited. In embodiments of this application, names of messages exchanged between devices, names of parameters in the messages, or the like are merely examples. Another name may alternatively be used during specific implementation. This is not limited.

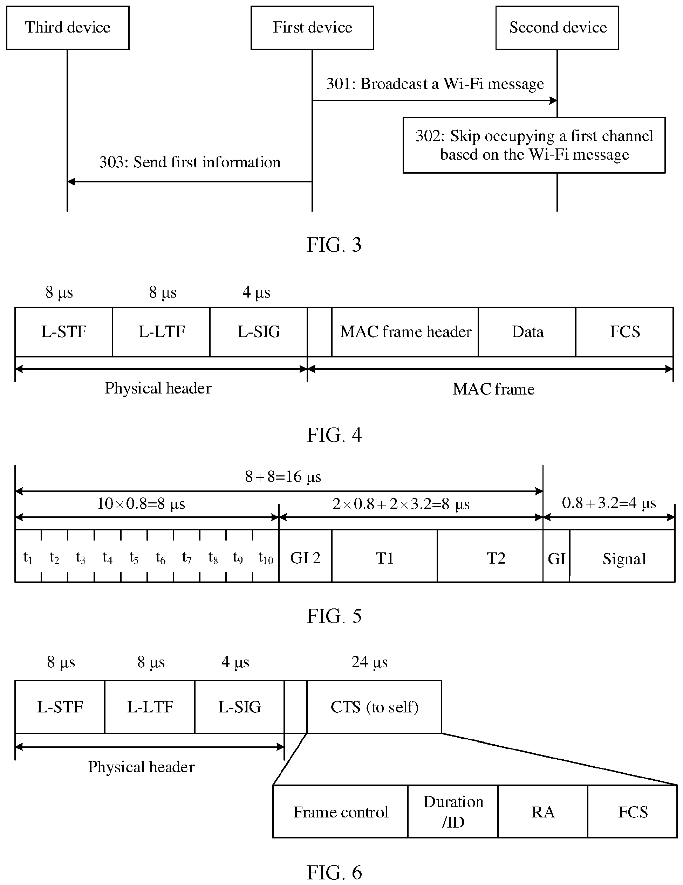

With reference to the communications system shown in FIG. 1f, an example in which the first communications system is the SL-U system and the second communications system is the Wi-Fi system is used below to describe an inter-system interference avoidance method provided in an embodiment of this application with reference to FIG. 3. The first device may be any communication device in the first communications system, the second device may be any communication device in the second communications system, and the third device may be any communication device other than the first device in the first communications system. The first device, the second device, and the third device described in the following embodiments may all have the components shown in FIG. 2.

FIG. 3 is a flowchart of an inter-system interference avoidance method according to an embodiment of this application. As shown in FIG. 3, the method includes the following steps.

Step 301: The first device broadcasts a Wi-Fi message.

The Wi-Fi message includes duration indication information. The duration indication information is used to indicate first duration. The first duration is used to indicate the second device to skip occupying a first channel within the first duration. A spectrum on which the first channel is located is an unlicensed spectrum.

Specifically, the first device indicates, by using the Wi-Fi message, the second device to skip occupying the first channel within the first duration, so that the second device can enter a sleep state after parsing the Wi-Fi message, to reduce channel occupation by the second device, and improve reliability of communication of the first communications system.

In a possible design, the first device broadcasts the Wi-Fi message when the first device needs to communicate with the third device by using the first communications system.

For example, the first device needs to send first information to the third device by using the first communications system. Before sending the first information, the first device may broadcast the Wi-Fi message, to indicate the second device to skip occupying the first channel, and when the second device skips occupying the first channel, send the first information to the third device by using the first communications system, to improve reliability of communication between the first device and the third device.

The first information may include service data and/or control information.

Specifically, the first device may determine the first duration by the first device, or may determine the first duration based on transmission duration of the first information. This is not limited.

The first duration may be greater than or equal to the transmission duration of the first information.

Optionally, the first device indicates, by using the Wi-Fi message, the second device to skip occupying all channels corresponding to the unlicensed spectrum, that is, the first channel is all the channels corresponding to the unlicensed spectrum.

Optionally, the first device indicates, by using the Wi-Fi message, the second device to skip occupying some channels corresponding to the unlicensed spectrum, that is, the first channel is some channels corresponding to the unlicensed spectrum.

For example, when the first channel is some channels corresponding to the unlicensed spectrum, the Wi-Fi message may further include a channel identifier of the first channel.

Specifically, the first device may determine, based on a communication requirement of the first device, the first channel that needs to be used when the first device communicates with the third device, and add the channel identifier of the first channel to the Wi-Fi message, so that the second device determines the first channel based on the channel identifier, and skips occupying the first channel within the first duration, to reduce inter-system interference caused by the second device to the first communications system, and improve the reliability of communication of the first communications system.

The communication requirement may be one or more of the following: a transmission delay requirement, a channel environment requirement, a communication reliability requirement, a service data type, and the like. This is not limited.

The channel identifier of the first channel may be an identifier used to indicate the first channel, such as a channel number or a center frequency.

For example, the unlicensed spectrum corresponds to a channel 1, a channel 2, and a channel 3. It is assumed that the first device determines, based on the communication requirement of the first device, that the channel 2 or the channel 3 needs to be used when the first device communicates with the third device. In this case, the first device may add channel identifiers of the channel 2 and the channel 3 to the Wi-Fi message, so that the second device skips occupying the channel 2 and the channel 3 based on the Wi-Fi message, to improve a success rate of communicating with the third device by occupying the channel 2 or the channel 3 by the first device, and improve quality of communication of the first communications system.

In another possible design, the first device is a controlling device in the first communications system, and when other communication devices in the first communications system need to communicate with each other, the first device broadcasts the Wi-Fi message.

For example, the first communications system includes a fourth device and a fifth device, and the fourth device needs to communicate with the fifth device. The fourth device may send, to the first device, indication information used to indicate that the fourth device needs to occupy a channel for communication, the first device broadcasts the Wi-Fi message based on the indication information, to indicate the second device to skip occupying the first channel, so as to improve a success rate of preempting the channel by the fourth device, and improve reliability of communication between the fourth device and the fifth device.

The first device may determine the first duration by the first device, or may determine the first duration based on a duration requirement of communication between the fourth device and the fifth device. This is not limited.

Specifically, for example, the fourth device sends second information to the fifth device. The fourth device may indicate transmission duration of the second information to the first device, so that the first device determines the first duration based on the transmission duration of the second information. Alternatively, the fourth device may determine the first duration based on the transmission duration of the second information, and send the first duration to the first device, so that the first device determines the Wi-Fi message based on the first duration. The first duration may be greater than or equal to the transmission duration of the second information.

Optionally, the first device indicates, by using the Wi-Fi message, the second device to skip occupying all channels corresponding to the unlicensed spectrum, that is, the first channel is all the channels corresponding to the unlicensed spectrum.

Optionally, the first device indicates, by using the Wi-Fi message, the second device to skip occupying some channels corresponding to the unlicensed spectrum, that is, the first channel is some channels corresponding to the unlicensed spectrum.

For example, when the first channel is some channels corresponding to the unlicensed spectrum, the Wi-Fi message may further include a channel identifier of the first channel.

Specifically, the first device may determine, based on a communication requirement of the fourth device for communicating with the fifth device, the first channel that needs to be used when the fourth device communicates with the fifth device, and add the channel identifier of the first channel to the Wi-Fi message, so that the second device determines the first channel based on the channel identifier, and skips occupying the first channel within the first duration, to reduce inter-system interference caused by the second device to the first communications system, and improve the reliability of communication of the first communications system. Alternatively, the fourth device may determine, based on a communication requirement of the fourth device for communicating with the fifth device, the first channel that needs to be used when the fourth device communicates with the fifth device, and send the channel identifier of the first channel to the first device, so that the first device adds the channel identifier of the first channel to the Wi-Fi message and broadcasts the Wi-Fi message.

The communication requirement may be one or more of the following: a transmission delay requirement, a channel environment requirement, a communication reliability requirement, a service data type, and the like. This is not limited.

The channel identifier of the first channel may be an identifier used to indicate the first channel, such as a channel number or a center frequency.

For example, the unlicensed spectrum corresponds to a channel 1, a channel 2, and a channel 3. It is assumed that the first device determines, based on the communication requirement of the fourth device for communicating with the fifth device, that the first channel that needs to be used when the fourth device communicates with the fifth device is the channel 2 or the channel 3. In this case, the first device may add channel identifiers of the channel 2 and the channel 3 to the Wi-Fi message, so that the second device skips occupying the channel 2 and the channel 3 based on the Wi-Fi message, to improve a success rate of communicating with the fifth device by occupying the channel 2 or the channel 3 by the fourth device, and improve quality of communication of the first communications system.

For another example, the unlicensed spectrum corresponds to a channel 1, a channel 2, and a channel 3. It is assumed that the fourth device determines, based on the communication requirement of the fourth device for communicating with the fifth device, that the first channel that needs to be used when the fourth device communicates with the fifth device is the channel 2 or the channel 3. In this case, the fourth device may send channel identifiers of the channel 2 and the channel 3 to the first device, so that the first device adds the channel identifiers of the channel 2 and the channel 3 to the Wi-Fi message, and the second device skips occupying the channel 2 and the channel 3 based on the Wi-Fi message, to improve a success rate of communicating with the fifth device by occupying the channel 2 or the channel 3 by the fourth device, and improve quality of communication of the first communications system.

For example, a frame structure of the Wi-Fi message may be a frame structure shown in FIG. 4. The frame structure may include a physical header and a media access control (media access control, MAC) frame. The physical header may include a legacy short training field (legacy short training field, L-STF) whose duration is 8 µs, a legacy long training field (legacy long training field, L-LTF) whose duration is 8 µs, and a legacy signal field (legacy signal field, L-SIG) whose duration is 4 µs. The MAC frame may include a MAC header (MAC Header) field, a data (data) field, and a frame check sequence (frame check sequence, FCS) field.

Specifically, as shown in FIG. 5, the L-STF field may include 10 fields whose duration is 0.8 µs. The L-LTF field may include two guard interval (guard interval, GI) fields whose duration is 0.8 µs, a T1 field whose duration is 3.2 µs, and a T2 field whose duration is 3.2 µs. The L-SIG field may include a GI field whose duration is 0.8 µs and a signal (SIGNAL) field whose duration is 3.2 µs.

The first seven fields of the L-STF field may be used to perform signal detection, automatic gain control (automatic gain control, AGC), and diversity selection (diversity selection), and the last three fields of the L-STF field may be used to perform coarse frequency offset estimation timing synchronization (coarse frequency offset estimation timing synchronization), to facilitate Wi-Fi system synchronization. The L-LTF field may be used to perform channel and fine frequency offset estimation (channel and fine frequency offset estimation), and carry indication information that facilitates decoding by a receiving device. The L-SIG field may be used to indicate a rate and a length.

For example, the duration indication information may indicate the first duration in an explicit indication manner.

For example, as shown in FIG. 6, the Wi-Fi message includes a clear to send (clear to send, CTS) frame whose duration is 24 µs. The CTS frame may include a frame control (frame control) field, a duration (duration/ID) field, a routing area (routing area, RA) field, and an FCS field. The duration field may include 16 bits. The routing area field may be used to indicate a MAC address of the first device. The first device may indicate the first duration by using the duration field.

Specifically, after determining the first duration, the first device may fill the first duration in the 0th bit to the 14th bit of the duration field, and set the 15th bit to 0, so that after receiving the Wi-Fi message, the second device determines, based on the first duration indicated in the duration field, to skip occupying a channel within the first duration.

It should be noted that the duration field in the CTS frame may be used to indicate 0 to 32767 µs, that is, the first device may determine any value in 0 to 32767 µs as the first duration.

For another example, the duration indication information may alternatively indicate the first duration in an implicit indication manner.

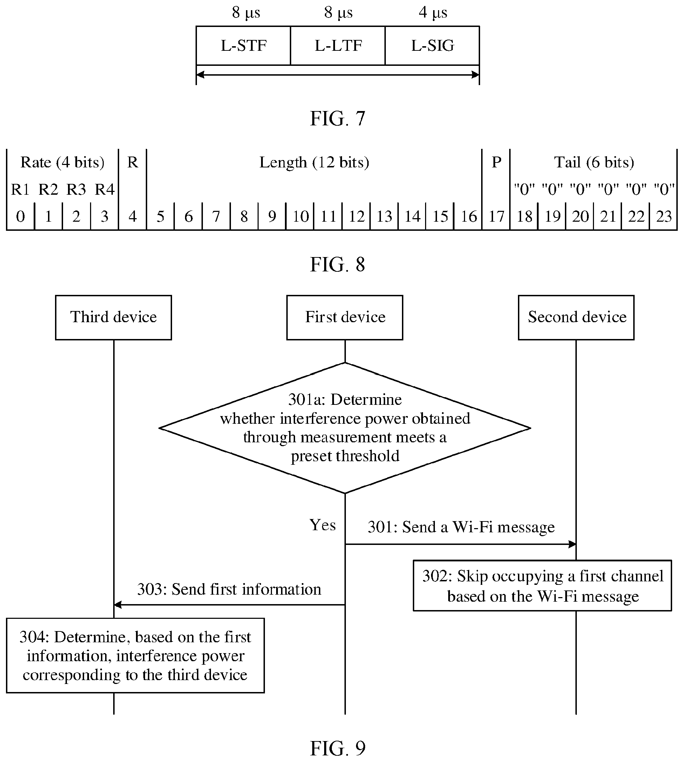

For example, as shown in FIG. 7, the Wi-Fi message includes only a physical header of 20 µs. The first device may indicate the first duration by using a rate and a length in the L-SIG field. As shown in FIG. 8, the L-SIG field may include a rate field of 4 bits, a length field of 12 bits, and a tail (tail) field of 6 bits. The rate field corresponds to a modulation and coding scheme (modulation and coding scheme, MCS) used for data transmission. The length field is used to indicate a length of the Wi-Fi message. The first duration=length/rate.

The rate may be a lowest rate, for example, 1/2 of a code rate using a binary phase shift keying (binary phase shift keying, BPSK) mechanism. The length may be a maximum length of 12 bits.

For example, the rate is the minimum rate, namely, 6 Mbps and the length is 12 bits, the first device may indicate, by using the rate and the length in the physical header, that the first duration is 5.46 ms.

It should be noted that the first device may send the Wi-Fi message to the second device in a broadcast form, or may send the Wi-Fi message to the second device in a unicast or multicast manner. This is not limited.

Further, as shown in FIG. 9, before performing Step 301, the first device further performs Step 301a.

Step 301a: The first device determines whether interference power obtained through measurement meets a preset threshold. If the interference power obtained through measurement meets the preset threshold, the foregoing Step 301 is performed.

Specifically, before broadcasting the Wi-Fi message, the first device performs channel detection and/or clear channel assessment (clear channel assessment, CCA), to measure interference power, and when the interference power meets the preset threshold, send the Wi-Fi message to the second device in a broadcast form, to avoid that the first device frequently sends the Wi-Fi message to the second device, avoid that the second device cannot perform normal communication due to frequent reception of the Wi-Fi message, improve reliability of communication of the first communications system, and ensure that the second communications system can run normally.

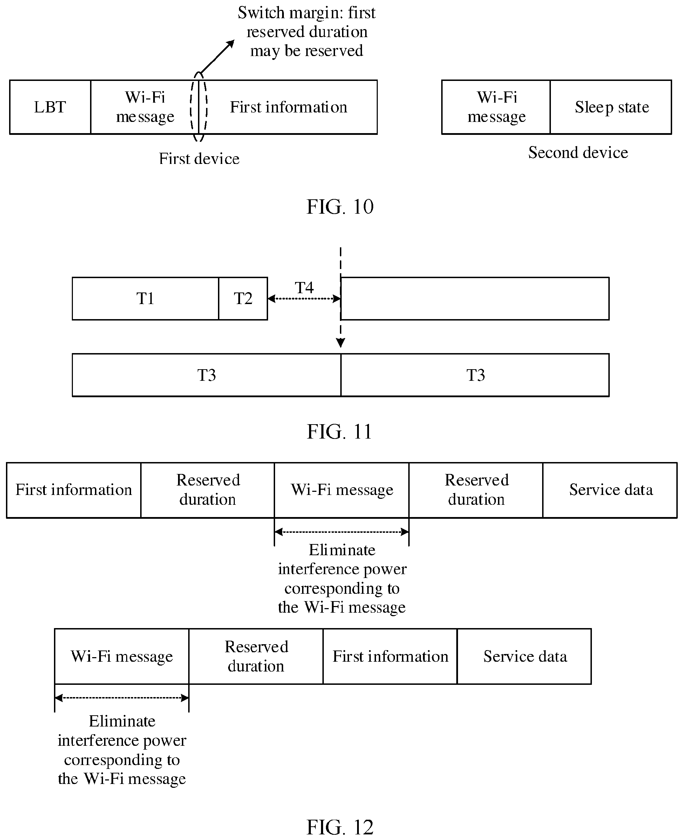

Optionally, as shown in FIG. 10, before sending the Wi-Fi message to the second device, the first device performs a listen before talk (listen before talk, LBT) mechanism, and obtains the interference power through measurement by performing channel detection and/or CCA.

Optionally, the preset threshold is preset interference power.

Specifically, after measuring the interference power, the first device may send the Wi-Fi message to the second device in a broadcast form when the interference power is greater than or equal to the preset interference power.

Alternatively, the preset threshold is a preset interference ratio.

Specifically, the first device may measure the interference power for a plurality of times, and send the Wi-Fi message to the second device when a ratio of a quantity of times when the interference power is greater than the preset threshold to a total quantity of times of measuring the interference power is greater than or equal to the preset interference ratio.

For example, the total quantity of times of measuring the interference power by the first device is 10, and the preset interference ratio is 0.6. It is assumed that the quantity of times when the interference power is greater than the preset threshold is 9, it may be determined that the ratio of the quantity of times when the interference power is greater than the preset threshold to the total quantity of times of measuring the interference power is 0.9. The ratio is greater than 0.6, thus the first device may send the Wi-Fi message to the second device.

It should be noted that the preset threshold and the preset threshold may be pre-specified in a communications protocol, or may be preconfigured by a network device. This is not limited.

In a possible design, the first device periodically measures the interference power.

For example, the first device may measure the interference power based on a period customized by the first device.

For example, a period in which the first device measures the interference power may be 5 ms, 10 ms, or 20 ms.

For another example, the first device may alternatively measure the interference power within a preconfigured period of time.

For example, the first device may measure the interference power at T={0 ms, 5 ms, 10 ms, 20 ms, 40 ms, 80 ms, 160 ms, 320 ms}.

In another possible design, the first device aperiodically measures the interference power.

For example, the first device may measure the interference power when communication performance of the first device is poor.

For example, the first device may measure the interference power when a channel cannot be preempted within preset duration. Alternatively, the first device may measure the interference power when a quantity of communication failures exceeds a preset quantity of failures. This is not limited.

Further, when the first device determines that the interference power meets the preset threshold, the first device may determine that the Wi-Fi message needs to be sent to the second device in a broadcast form, and send the Wi-Fi message to the second device in a broadcast form after second reserved duration.

The second reserved duration may be greater than or equal to a second switching delay. The second switching delay is a delay needed for the first device to switch to sending the Wi-Fi message in a broadcast form.

For example, the second switching delay may be a scheduling delay corresponding to a resource scheduled by the first device for sending the Wi-Fi message in a broadcast form.

Step 302: The second device skips occupying the first channel based on the Wi-Fi message.

Specifically, after receiving the Wi-Fi message sent by the first device, the second device skips occupying the first channel within the first duration based on the Wi-Fi message.

When the second device skips occupying the channel, the second device may stop preempting the channel based on the Wi-Fi message, or may be described as that the second device stops contending for the channel. When the second device has occupied the channel, the second device may release the occupied channel based on the Wi-Fi message. Therefore, a success rate of preempting the channel by the communication device in the first communications system is improved, and reliability of communication of the first communications system is improved.

For example, as shown in FIG. 10, after receiving the Wi-Fi message sent by the first device, the second device may parse the Wi-Fi message, and skips occupying the first channel within the first duration based on a parsed Wi-Fi message, or may be described as that the second device enters a sleep state within the first duration.

Step 303: The first device sends the first information to the third device.

The first information includes service data and/or control information.

Specifically, when the first device needs to communicate with the third device, the first device may send the Wi-Fi message to the second device in a broadcast form, to indicate the second device to skip occupying the first channel, and send the first information to the third device when the second device skips occupying the first channel, to improve the reliability of communication between the first device and the third device.

Optionally, the first information is further used to indicate the first device to broadcast the Wi-Fi message.

Specifically, for example, the first device is a controlling device in the first communications system. When the third device in the first communications system needs to communicate with another communication device, the first device may send the Wi-Fi message to the second device in a broadcast manner, to indicate the second device to skip occupying the first channel within the first duration, and send, to the third device, the first information used to indicate that the first device has broadcast the Wi-Fi message, so that the third device communicates with the another communication device when the second device skips occupying the first channel, to improve reliability of communication of the third device.

Optionally, the first information is further used to indicate a time-frequency resource of the Wi-Fi message.

The time-frequency resource of the Wi-Fi message may be used to indicate a time domain resource and a frequency domain resource that correspond to the Wi-Fi message.

Specifically, because the Wi-Fi message is actually sent by the first device located in the same communications system as the third device, and is not sent by the second device, when measuring interference power, the third device may determine, based on the time-frequency resource of the Wi-Fi message, interference power corresponding to the Wi-Fi message, and eliminate the interference power corresponding to the Wi-Fi message from initial interference power obtained through measurement, to improve accuracy of interference power determined by the third device.

For example, the first device may add the first information to sidelink control information (sidelink control information, SCI) signaling, MAC control element (media access control control element, MAC CE) signaling, or radio resource control (radio resource control, RRC) signaling, and send the sidelink control information (sidelink control information, SCI) signaling, the MAC control element (media access control control element, MAC CE) signaling, or the radio resource control (radio resource control, RRC) signaling to the third device. This is not limited.

Optionally, when performing the foregoing Step 301, the first device performs the foregoing Step 303 after first reserved duration. To be specific, when broadcasting the Wi-Fi message, the first device sends the first information to the third device after the first reserved duration.

The first reserved duration may be greater than or equal to a sum of transmission duration of the Wi-Fi message and a first switching delay. The first switching delay is a delay needed for the first device to switch from broadcasting the Wi-Fi message to sending the first information.

Specifically, the first switching delay may be a scheduling delay of performing resource scheduling when the first device switches from broadcasting the Wi-Fi message to sending the first information.

For example, when the first device is load based equipment (load based equipment, LBE), the first reserved duration may be equal to the sum of the transmission duration of the Wi-Fi message and the first switching delay.

When the first device is in an LBE mode, when sending the Wi-Fi message to the second device, the first device may send the first information to the third device after the transmission duration of the Wi-Fi message and the first switching delay.

For another example, when the first device is frame based equipment (frame based equipment, FBE), the first reserved duration may be greater than the sum of the transmission duration of the Wi-Fi message and the first switching delay.

When the first device is in an FBE mode, the first device may send the Wi-Fi message and the first information based on a preset minimum transmission unit.

Specifically, when the first device needs to send the Wi-Fi message to the second device, the first device may send the Wi-Fi message to the second device based on the minimum transmission unit, and send the first information to the third device based on a next minimum transmission unit after the transmission duration of the Wi-Fi message and the first switching delay.

For example, as shown in FIG. 11, the minimum transmission unit is T3. The first reserved duration T=T1+T2+T4, where T4=[fix((T1+T2)/T3)+1]×T3-(T1+T2), a fix function is a quotient function, T1 is the transmission duration of the Wi-Fi message, and T2 is the first switching delay.

It should be noted that the first switching delay may be pre-specified in a communications protocol, or may be preconfigured by a network device. This is not limited.

The first switching delay may be within 100 microseconds. Optionally, the first switching delay is 0.

Based on the method shown in FIG. 3, the first device sends, to the second device in a different system, the Wi-Fi message used to indicate the second device to skip occupying the first channel, so that the second device skips occupying the first channel after receiving the Wi-Fi message. The first device sends the first information to the third device in a same system when the second device skips occupying the first channel, to reduce inter-system interference, and improve reliability of intra-system communication.

Based on the foregoing FIG. 3, after receiving the first information sent by the first device, the third device may further perform Step 304 shown in FIG. 9, to improve the accuracy of the interference power determined by the third device.

Step 304: The third device determines, based on the first information, interference power corresponding to the third device.

The interference power corresponding to the third device is a difference between initial interference power determined when the third device performs channel detection and/or clear channel assessment CCA and interference power corresponding to the Wi-Fi message.

Specifically, for a scenario of non-transparent transmission communication, when the first device sends the Wi-Fi message in a broadcast form, the third device may also receive the Wi-Fi message. However, because the Wi-Fi message is actually sent by the first device, when the third device determines the interference power corresponding to the third device, the interference power corresponding to the Wi-Fi message may be eliminated from the initial interference power obtained through measurement.

For example, as shown in FIG. 12, the third device may determine the time-frequency resource of the Wi-Fi message based on the first information, determine, based on the time-frequency resource of the Wi-Fi message, the interference power corresponding to the Wi-Fi message, and determine the difference between the initial interference power determined when the third device performs channel listening and/or clear channel assessment CCA and the interference power corresponding to the Wi-Fi message as the interference power corresponding to the third device.

In the foregoing FIG. 3 to FIG. 12, the inter-system interference avoidance method provided in this embodiment of this application is described in detail by using an example in which the first communications system is the SL-U system and the second communications system is the Wi-Fi system. Similarly, when the first communications system is the NR-U/LAA system and the second communications system is the wireless fidelity Wi-Fi system, or when the first communications system is the SL-U system and the second communications system is the Bluetooth system, or when the first communications system is the Bluetooth system and the second communications system is the Wi-Fi system, the communication device in the first communications system may run with reference to a function performed by the first device or the third device, and the communication device in the second communications system may run with reference to a function performed by the second device, to reduce inter-system interference between the communications systems.

The foregoing mainly describes the solutions provided in this embodiment of this application from a perspective of interaction between the devices. It may be understood that, to implement the foregoing functions, the devices include corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this embodiment, the devices may be divided into function modules based on the foregoing method examples. For example, each function module may be obtained through division based on each corresponding function, or two or more functions may be integrated into one processing module. The foregoing integrated module may be implemented in a form of hardware, or may be implemented in a form of a software function module. It should be noted that, in embodiments of this application, module division is an example, and is merely a logical function division. In actual implementation, another division manner may be used.

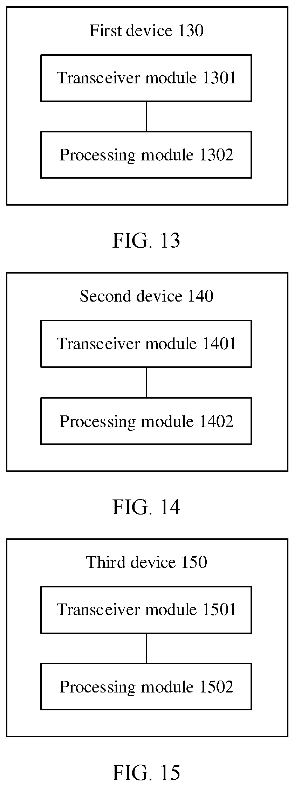

When each function module is obtained through division based on each corresponding function, FIG. 13 shows a first device. The first device 130 includes a transceiver module 1301 and a processing module 1302. For example, the first device 130 may be a first device, or may be a chip applied to a first device or another combined assembly, component, or the like that has a function of the first device. When the first device 130 is the first device, the transceiver module 1301 may be a transceiver. The transceiver may include an antenna, a radio frequency circuit, and the like. The processing module 1302 may be a processor (or a processing circuit), for example, a baseband processor. The baseband processor may include one or more CPUs. When the first device 130 is the component having the function of the first device, the transceiver module 1301 may be a radio frequency unit. The processing module 1302 may be a processor (or a processing circuit), for example, a baseband processor. When the first device 130 is a chip system, the transceiver module 1301 may be an input/output interface of a chip (for example, a baseband chip). The processing module 1302 may be a processor (or a processing circuit) of the chip system, and may include one or more central processing units. It should be understood that the transceiver module 1301 in this embodiment of this application may be implemented by a transceiver or a transceiver-related circuit component, and the processing module 1302 may be implemented by a processor or a processor-related circuit component (or referred to as a processing circuit).

For example, the transceiver module 1301 may be configured to perform all sending and receiving operations performed by the first device in the embodiment shown in FIG. 3, and/or configured to support another process of the technology described in this specification. The processing module 1302 may be configured to perform all operations other than the receiving and sending operations performed by the first device in the embodiment shown in FIG. 3, and/or configured to support another process of the technology described in this specification.

Specifically, the transceiver module 1301 is configured to broadcast a wireless fidelity Wi-Fi message including duration indication information. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system. The transceiver module 1301 is further configured to send, by using a first communications system, first information including service data and/or control information to a third device.

In a possible design, the first duration is greater than or equal to transmission duration of the first information.

In a possible design, the first device further includes the processing module 1302. The processing module 1302 is configured to perform channel detection and/or clear channel assessment CCA, to measure interference power. When the interference power meets a preset threshold, the transceiver module 1301 broadcasts the Wi-Fi message.

In a possible design, the first information is further used to indicate the first device to broadcast the Wi-Fi message.

In a possible design, the first information is used to indicate a time-frequency resource of the Wi-Fi message.

In a possible design, the transceiver module 1301 is further configured to: after broadcasting the Wi-Fi message, send the first information to the third device after first reserved duration.

In a possible design, the first reserved duration is greater than or equal to a sum of transmission duration of the Wi-Fi message and a first switching delay. The first switching delay is a delay needed for the first device to switch from broadcasting the Wi-Fi message to sending the first information.

In a possible design, after the processing module 1302 determines to broadcast the Wi-Fi message, the transceiver module 1301 sends the Wi-Fi message to the second device after second reserved duration.

In a possible design, the second reserved duration is greater than or equal to a second switching delay. The second switching delay is a delay needed for the first device to switch to sending the Wi-Fi message.

In another possible implementation, the transceiver module 1301 in FIG. 13 may be replaced with a transceiver, and a function of the transceiver module 1301 may be integrated into the transceiver. The processing module 1302 may be replaced with a processor, and a function of the processing module 1302 may be integrated into the processor. Further, the first device 130 shown in FIG. 13 may further include a memory. When the transceiver module 1301 is replaced with the transceiver and the processing module 1302 is replaced with the processor, the first device 130 in this embodiment of this application may be the communication apparatus shown in FIG. 2.

When each function module is obtained through division based on each corresponding function, FIG. 14 shows a second device. The second device 140 may include a transceiver module 1401 and a processing module 1402. For example, the second device 140 may be a second device, or may be a chip applied to a second device or another combined assembly, component, or the like that has a function of the second device. When the second device 140 is the second device, the transceiver module 1401 may be a transceiver. The transceiver may include an antenna, a radio frequency circuit, and the like. The processing module 1402 may be a processor (or a processing circuit), for example, a baseband processor. The baseband processor may include one or more CPUs. When the second device 140 is the component having the function of the second device, the transceiver module 1401 may be a radio frequency unit. The processing module 1402 may be a processor (or a processing circuit), for example, a baseband processor. When the second device 140 is a chip system, the transceiver module 1401 may be an input/output interface of a chip (for example, a baseband chip). The processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (or referred to as a processing circuit).

For example, the transceiver module 1401 may be configured to perform all sending and receiving operations performed by the second device in the embodiment shown in FIG. 3, and/or configured to support another process of the technology described in this specification. The processing module 1402 may be configured to perform all operations other than the receiving and sending operations performed by the second device in the embodiment shown in FIG. 3, and/or configured to support another process of the technology described in this specification.

Specifically, the transceiver module 1401 is configured to obtain a Wi-Fi message that is from a first device and that includes duration indication information. The second device is a device that performs communication by using a Wi-Fi system. The first device performs communication by using a first communications system. The first communications system is a sidelink-unlicensed SL-U system, a new radio-unlicensed NR-U system, or a licensed assisted access LAA system. The duration indication information is used to indicate first duration. The first duration is used to indicate the second device to skip occupying a first channel within the first duration. A spectrum on which the first channel is located is an unlicensed spectrum. The processing module 1402 is configured to skip occupying the first channel within the first duration based on the Wi-Fi message.

In another possible implementation, the transceiver module 1401 in FIG. 14 may be replaced with a transceiver, and a function of the transceiver module 1401 may be integrated into the transceiver. The processing module 1402 may be replaced with a processor, and a function of the processing module 1402 may be integrated into the processor. Further, the second device 140 shown in FIG. 14 may further include a memory. When the transceiver module 1401 is replaced with the transceiver and the processing module 1402 is replaced with the processor, the second device 140 in this embodiment of this application may be the communication apparatus shown in FIG. 2.

When each function module is obtained through division based on each corresponding function, FIG. 15 shows a third device. The third device 150 may include a transceiver module 1501 and a processing module 1502. For example, the third device 150 may be a third device, or may be a chip applied to a third device or another combined assembly, component, or the like that has a function of the third device. When the third device 150 is the third device, the transceiver module 1501 may be a transceiver. The transceiver may include an antenna, a radio frequency circuit, and the like. The processing module 1502 may be a processor (or a processing circuit), for example, a baseband processor. The baseband processor may include one or more CPUs. When the third device 150 is the component having the function of the third device, the transceiver module 1501 may be a radio frequency unit. The processing module 1502 may be a processor (or a processing circuit), for example, a baseband processor. When the third device 150 is a chip system, the transceiver module 1501 may be an input/output interface of a chip (for example, a baseband chip). The processing module 1502 may be a processor (or a processing circuit) of the chip system, and may include one or more central processing units. It should be understood that the transceiver module 1501 in this embodiment of this application may be implemented by a transceiver or a transceiver-related circuit component, and the processing module 1502 may be implemented by a processor or a processor-related circuit component (or referred to as a processing circuit).

For example, the transceiver module 1501 may be configured to perform all sending and receiving operations performed by the third device in the embodiment shown in FIG. 3, and/or configured to support another process of the technology described in this specification. The processing module 1502 may be configured to perform all operations other than the receiving and sending operations performed by the third device in the embodiment shown in FIG. 3, and/or configured to support another process of the technology described in this specification.

Specifically, the transceiver module 1501 is configured to: after a first device broadcasts a Wi-Fi message including duration indication information, receive first information that is sent by the first device by using a first communications system and that includes service data and/or control information. The first device performs communication by using the first communications system. The first communications system is a sidelink-unlicensed SL-U system, a new radio-unlicensed NR-U system, or a licensed assisted access LAA system. The duration indication information is used to indicate first duration. The first duration is used to indicate a second device to skip occupying a first channel within the first duration. A spectrum on which the first channel is located is an unlicensed spectrum. The second device is a device that performs communication by using a Wi-Fi system.

In a possible design, the processing module 1502 is configured to determine, based on the first information, interference power corresponding to the third device. The interference power corresponding to the third device is a difference between initial interference power determined when the third device performs channel detection and/or clear channel assessment CCA and interference power corresponding to the Wi-Fi message.

In another possible implementation, the transceiver module 1501 in FIG. 15 may be replaced with a transceiver, and a function of the transceiver module 1501 may be integrated into the transceiver. The processing module 1502 may be replaced with a processor, and a function of the processing module 1502 may be integrated into the processor. Further, the third device 150 shown in FIG. 15 may further include a memory. When the transceiver module 1501 is replaced with the transceiver and the processing module 1502 is replaced with the processor, the third device 150 in this embodiment of this application may be the communication apparatus shown in FIG. 2.

An embodiment of this application further provides a computer-readable storage medium. All or some of the processes in the foregoing method embodiments may be implemented by a computer program instructing related hardware. The program may be stored in the computer-readable storage medium. When the program is run, the processes of the foregoing method embodiments can be performed. The computer-readable storage medium may be an internal storage unit of the terminal (which includes a data transmit end and/or a data receive end) in any one of the foregoing embodiments, for example, a hard disk or a memory of the terminal. The computer-readable storage medium may alternatively be an external storage device of the terminal, for example, a plug-in hard disk, a smart media card (smart media card, SMC), a secure digital (secure digital, SD) card, or a flash card (flash card) provided on the terminal. Further, the computer-readable storage medium may alternatively include both the internal storage unit and the external storage device of the terminal. The computer-readable storage medium is configured to store the computer program and another program and data that are needed by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Based on the descriptions of the foregoing implementations, it may be clearly understood by a person skilled in the art that, for ease and brevity of description, division of the foregoing function modules is merely used as an example for description. In actual application, the foregoing functions may be allocated to different function modules for implementation according to a requirement, that is, an internal structure of the apparatus is divided into different function modules, to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes a plurality of instructions for instructing a device (which may be a single-chip microcomputer, a chip, or the like) or a processor (processor) to perform all or some of the steps of the method in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An inter-system interference avoidance method, wherein the method is performed by a first device (130), the first device (130) performs communication by using a first communications system, and the first communications system is a sidelink-unlicensed ,SL-U, system, a new radio-unlicensed, NR-U, system, or a licensed assisted access, LAA, system; and the method comprises:
performing (301a), by the first device (130), channel detection and/or clear channel assessment, CCA, to measure interference power;
broadcasting (301), by the first device (130), a wireless fidelity, Wi-Fi, message when the interference power meets a preset threshold, wherein the Wi-Fi message comprises duration indication information, the duration indication information is used to indicate first duration, the first duration is used to indicate a second device (140) to skip occupying (302) a first channel within the first duration, a spectrum on which the first channel is located is an unlicensed spectrum, and the second device (140) is a device that performs communication by using a Wi-Fi system; and
sending (303), by the first device (130), first information to a third device (150) by using the first communications system, wherein the first information comprises service data and/or control information;
wherein
the first duration is greater than or equal to transmission duration of the first information.

2. The method according to claim 1, wherein
the first information is further used to indicate that the first device (130) has broadcast the Wi-Fi message.

3. The method according to any one of claims 1 to 2, wherein
the first information is used to indicate a time-frequency resource of the Wi-Fi message.

4. The method according to any one of claims 1 to 3, wherein the sending, by the first device (130), first information to a third device (150) comprises:
after the first device (130) broadcasts the Wi-Fi message, sending, by the first device (130), the first information to the third device (150) after first reserved duration;
wherein
the first reserved duration is greater than or equal to a sum of transmission duration of the Wi-Fi message and a first switching delay, and the first switching delay is a delay needed for the first device (130) to switch from broadcasting the Wi-Fi message to sending the first information.

5. The method according to any one of claims 1 to 4, wherein the broadcasting, by the first device (130), the Wi-Fi message comprises:
after the first device (130) determines to broadcast the Wi-Fi message, broadcasting, by the first device (130), the Wi-Fi message after second reserved duration;
wherein
the second reserved duration is greater than or equal to a second switching delay, and the second switching delay is a delay needed for the first device (130) to switch to broadcasting the Wi-Fi message.

6. An inter-system interference avoidance method, comprising:
performing (301a), by the first device (130), channel detection and/or clear channel assessment CCA, to measure interference power;
broadcasting, by a first device (130), a wireless fidelity, Wi-Fi, message when the interference power meets a preset threshold, wherein the first device (130) performs communication by using a first communications system, the first communications system is a sidelink-unlicensed SL-U system, a new radio-unlicensed NR-U system, or a licensed assisted access LAA system, the Wi-Fi message comprises duration indication information, the duration indication information is used to indicate first duration, the first duration is used to indicate a second device (140) to skip occupying a first channel within the first duration, a spectrum on which the first channel is located is an unlicensed spectrum, and the second device (140) is a device that performs communication by using a Wi-Fi system;
obtaining, by the second device (140), the Wi-Fi message;
sending, by the first device (130), first information to a third device (150) by using the first communications system, wherein the first information comprises service data and/or control information; and
receiving, by the third device (150), the first information from the first device (130);
wherein
the first duration is greater than or equal to transmission duration of the first information.

7. The method according to claim 6, wherein
the first information is further used to indicate that the first device (130) has broadcast the Wi-Fi message.

8. The method according to any one of claims 6 to 7, wherein
the first information is used to indicate a time-frequency resource of the Wi-Fi message.

9. The method according to any one of claims 6 to 8, wherein the sending, by the first device (130), first information to a third device (150) comprises:
after the first device (130) broadcasts the Wi-Fi message, sending, by the first device (130), the first information to the third device (150) after first reserved duration;
wherein
the first reserved duration is greater than or equal to a sum of transmission duration of the Wi-Fi message and a first switching delay, and the first switching delay is a delay needed for the first device (130) to switch from broadcasting the Wi-Fi message to sending the first information.

10. The method according to any one of claims 6 to 9, wherein the broadcasting, by the first device (130), the Wi-Fi message comprises:
after the first device (130) determines to broadcast the Wi-Fi message, broadcasting, by the first device (130), the Wi-Fi message after second reserved duration;
wherein
the second reserved duration is greater than or equal to a second switching delay, and the second switching delay is a delay needed for the first device (130) to switch to broadcasting the Wi-Fi message.

11. The method according to any one of claims 6 to 10, wherein
the third device (150) determines, based on the first information, interference power corresponding to the third device (150), and the interference power corresponding to the third device (150) is a difference between initial interference power determined when the third device (150) performs channel detection and/or clear channel assessment CCA and interference power corresponding to the Wi-Fi message.

12. A first device (130), wherein the first device (130) comprises one or more processors and a transceiver, and the one or more processors and the transceiver support the first device (130) in performing the inter-system interference avoidance method according to any one of claims 1 to 5, or performing an action performed by the first device (130) in the inter-system interference avoidance method according to any one of claims 6 to 11.

13. A chip, comprising a logic circuit and a communication interface, wherein the communication interface is coupled to the logic circuit, the logic circuit is configured to read instructions, to perform the inter-system interference avoidance method according to any one of claims 1 to 5, or perform an action performed by the first device (130) in the inter-system interference avoidance method according to any one of claims 6 to 11, and the communication interface is configured to communicate with another module other than the chip.

## Patentansprüche

1. Verfahren für eine Vermeidung von Interferenzen zwischen Systemen, wobei das Verfahren durch eine erste Vorrichtung (130) durchgeführt wird, die erste Vorrichtung (130) Kommunikation durch Verwenden eines ersten Kommunikationssystems durchführt und das erste Kommunikationssystem ein Sidelink-Unlicensed(SL-U)-System, ein New Radio-Unlicensed(NR-U)-System oder ein Licensed Assisted Access(LAA)-System ist; und das Verfahren umfasst:
Durchführen (301a), durch die erste Vorrichtung (130), einer Kanalerkennung und/oder einer Clear-Channel-Bewertung (CCA) zum Messen einer Interferenzleistung;
Rundsenden (301), durch die erste Vorrichtung (130), einer Wireless-Fidelity(Wi-Fi)-Nachricht, wenn die Interferenzleistung einen voreingestellten Schwellenwert erreicht, wobei die Wi-Fi-Nachricht Zeitdauerangabeinformationen umfasst, die Zeitdauerangabeinformationen verwendet werden, um eine erste Zeitdauer anzugeben, die erste Zeitdauer verwendet wird, um einer zweiten Vorrichtung (140) anzugeben, ein Belegen (302) eines ersten Kanals innerhalb der ersten Zeitdauer zu überspringen, ein Spektrum, auf dem sich der erste Kanal befindet, ein unlizenziertes Spektrum ist, und die zweite Vorrichtung (140) eine Vorrichtung ist, die Kommunikation durch Verwenden eines Wi-Fi-Systems durchführt; und
Senden (303), durch die erste Vorrichtung (130), von ersten Informationen an eine dritte Vorrichtung (150) durch Verwenden des ersten Kommunikationssystems, wobei die ersten Informationen Dienstdaten und/oder Steuerinformationen umfassen;
wobei
die erste Zeitdauer größer als oder gleich einer Übertragungsdauer der ersten Informationen ist.

2. Verfahren nach Anspruch 1, wobei
die ersten Informationen ferner verwendet werden, um anzugeben, dass die erste Vorrichtung (130) die Wi-Fi-Nachricht rundgesendet hat.

3. Verfahren nach einem der Ansprüche 1 bis 2, wobei
die ersten Informationen verwendet werden, um eine Zeit-Frequenz-Ressource der Wi-Fi-Nachricht anzugeben.

4. Verfahren nach einem der Ansprüche 1 bis 3, wobei das Senden, durch die erste Vorrichtung (130), von ersten Informationen an eine dritte Vorrichtung (150) umfasst:
nachdem die erste Vorrichtung (130) die Wi-Fi-Nachricht rundgesendet hat, Senden, durch die erste Vorrichtung (130), der ersten Informationen an die dritte Vorrichtung (150) nach einer ersten reservierten Zeitdauer;
wobei
die erste reservierte Zeitdauer größer als oder gleich einer Summe aus Übertragungsdauer der Wi-Fi-Nachricht und einer ersten Umschaltverzögerung ist, und die erste Umschaltverzögerung eine Verzögerung ist, die die erste Vorrichtung (130) benötigt, um von dem Rundsenden der Wi-Fi-Nachricht zum Senden der ersten Informationen umzuschalten.

5. Verfahren nach einem der Ansprüche 1 bis 4, wobei das Rundsenden, durch die erste Vorrichtung (130), der Wi-Fi-Nachricht umfasst:
nachdem die erste Vorrichtung (130) bestimmt, die Wi-Fi-Nachricht rundzusenden, Rundsenden, durch die erste Vorrichtung (130), der Wi-Fi-Nachricht nach einer zweiten reservierten Zeitdauer;
wobei
die zweite reservierte Zeitdauer größer als oder gleich einer zweiten Umschaltverzögerung ist und die zweite Umschaltverzögerung eine Verzögerung ist, die die erste Vorrichtung (130) benötigt, um auf das Rundsenden der Wi-Fi-Nachricht umzuschalten.

6. Verfahren für die Vermeidung von Interferenzen zwischen Systemen, das Folgendes umfasst:
Durchführen (301a), durch die erste Vorrichtung (130), der Kanalerkennung und/oder der Clear-Channel-Bewertung (CCA) zum Messen einer Interferenzleistung;
Rundsenden, durch eine erste Vorrichtung (130), einer Wireless-Fidelity(Wi-Fi)-Nachricht, wenn die Interferenzleistung einen voreingestellten Schwellenwert erreicht, wobei die erste Vorrichtung (130) Kommunikation durch Verwenden eines ersten Kommunikationssystems durchführt, das erste Kommunikationssystem ein ein Sidelink-Unlicensed(SL-U)-System, ein New Radio-Unlicensed(NR-U)-System oder ein Licensed Assisted Access(LAA)-System ist, die Wi-Fi-Nachricht Zeitdauerangabeinformationen umfasst, die Zeitdauerangabeinformationen verwendet werden, um eine erste Zeitdauer anzugeben, die erste Zeitdauer verwendet wird, um einer zweiten Vorrichtung (140) anzugeben, das Belegen eines ersten Kanals innerhalb der ersten Zeitdauer zu überspringen, ein Spektrum, auf dem sich der erste Kanal befindet, ein unlizenziertes Spektrum ist, und die zweite Vorrichtung (140) eine Vorrichtung ist, die Kommunikation durch Verwenden eines Wi-Fi-Systems durchführt;
Erhalten, durch die zweite Vorrichtung (140), der Wi-Fi-Nachricht;
Senden, durch die erste Vorrichtung (130), von ersten Informationen an eine dritte Vorrichtung (150) durch Verwenden des ersten Kommunikationssystems, wobei die ersten Informationen Dienstdaten und/oder Steuerinformationen umfassen; und
Empfangen, durch die dritte Vorrichtung (150), der ersten Informationen von der ersten Vorrichtung (130);
wobei
die erste Zeitdauer größer als oder gleich der Übertragungsdauer der ersten Informationen ist.

7. Verfahren nach Anspruch 6, wobei
die ersten Informationen ferner verwendet werden, um anzugeben, dass die erste Vorrichtung (130) die Wi-Fi-Nachricht rundgesendet hat.

8. Verfahren nach einem der Ansprüche 6 bis 7, wobei
die ersten Informationen verwendet werden, um eine Zeit-Frequenz-Ressource der Wi-Fi-Nachricht anzugeben.

9. Verfahren nach einem der Ansprüche 6 bis 8, wobei das Senden, durch die erste Vorrichtung (130), von ersten Informationen an eine dritte Vorrichtung (150) umfasst:
nachdem die erste Vorrichtung (130) die Wi-Fi-Nachricht rundgesendet hat, Senden, durch die erste Vorrichtung (130), der ersten Informationen an die dritte Vorrichtung (150) nach einer ersten reservierten Zeitdauer;
wobei
die erste reservierte Zeitdauer größer als oder gleich einer Summe aus Übertragungsdauer der Wi-Fi-Nachricht und einer ersten Umschaltverzögerung ist, und die erste Umschaltverzögerung eine Verzögerung ist, die die erste Vorrichtung (130) benötigt, um von dem Rundsenden der Wi-Fi-Nachricht zum Senden der ersten Informationen umzuschalten.

10. Verfahren nach einem der Ansprüche 6 bis 9, wobei das Rundsenden, durch die erste Vorrichtung (130), der Wi-Fi-Nachricht umfasst:
nachdem die erste Vorrichtung (130) bestimmt, die Wi-Fi-Nachricht rundzusenden, Rundsenden, durch die erste Vorrichtung (130), der Wi-Fi-Nachricht nach einer zweiten reservierten Zeitdauer;
wobei
die zweite reservierte Zeitdauer größer als oder gleich einer zweiten Umschaltverzögerung ist und die zweite Umschaltverzögerung eine Verzögerung ist, die die erste Vorrichtung (130) benötigt, um auf das Rundsenden der Wi-Fi-Nachricht umzuschalten.

11. Verfahren nach einem der Ansprüche 6 bis 10, wobei
die dritte Vorrichtung (150) basierend auf den ersten Informationen eine der dritten Vorrichtung (150) entsprechende Interferenzleistung bestimmt und die der dritten Vorrichtung (150) entsprechende Interferenzleistung eine Differenz zwischen einer anfänglichen Interferenzleistung, die bestimmt wird, wenn die dritte Vorrichtung (150) die Kanalerkennung und/oder die Clear Channel-Bewertung (CCA) durchführt, und einer der Wi-Fi-Nachricht entsprechenden Interferenzleistung ist.

12. Erste Vorrichtung (130), wobei die erste Vorrichtung (130) einen oder mehrere Prozessoren und einen Transceiver umfasst, und der eine oder die mehreren Prozessoren und der Transceiver die erste Vorrichtung (130) dabei unterstützen, das Verfahren für die Vermeidung von Interferenzen zwischen Systemen nach einem der Ansprüche 1 bis 5 durchzuführen oder eine durch die erste Vorrichtung (130) durchgeführte Handlung in dem Verfahren für die Vermeidung von Interferenzen zwischen Systemen nach einem der Ansprüche 6 bis 11 durchzuführen.

13. Chip, der eine Logikschaltung und eine Kommunikationsschnittstelle umfasst, wobei die Kommunikationsschnittstelle an die Logikschaltung gekoppelt ist, die Logikschaltung konfiguriert ist, um Anweisungen zu lesen, um das Verfahren für die Vermeidung von Interferenzen zwischen Systemen nach einem der Ansprüche 1 bis 5 durchzuführen, oder um eine durch die erste Vorrichtung (130) in dem Verfahren für die Vermeidung von Interferenzen zwischen Systemen nach einem der Ansprüche 6 bis 11 durchgeführte Handlung durchzuführen, und die Kommunikationsschnittstelle konfiguriert ist, um mit einem anderen Modul als dem Chip zu kommunizieren.

## Revendications

1. Procédé d'évitement d'interférences entre systèmes, dans lequel le procédé est réalisé par un premier dispositif (130), le premier dispositif (130) réalise une communication en utilisant un premier système de communications, et le premier système de communications est un système de liaison latérale sans licence, SL-U, un système nouvelle radio sans licence, NR-U, ou un système d'accès assisté sous licence, LAA ; et le procédé comprend :
la réalisation (301a), par le premier dispositif (130), d'une détection de canal et/ou d'une évaluation de canal libre, CCA, pour mesurer une puissance d'interférence ;
la diffusion (301), par le premier dispositif (130), d'un message de fidélité sans fil, Wi-Fi, lorsque la puissance d'interférence satisfait à un seuil prédéfini, dans lequel le message Wi-Fi comprend des informations d'indication de durée, les informations d'indication de durée sont utilisées pour indiquer une première durée, la première durée est utilisée pour indiquer à un deuxième dispositif (140) de sauter l'occupation (302) d'un premier canal au cours de la première durée, un spectre sur lequel se trouve le premier canal est un spectre sans licence, et le deuxième dispositif (140) est un dispositif qui réalise une communication en utilisant un système Wi-Fi ; et
l'envoi (303), par le premier dispositif (130), de premières informations à un troisième dispositif (150) en utilisant le premier système de communications, dans lequel les premières informations comprennent des données de service et/ou des informations de commande ;
dans lequel
la première durée est supérieure ou égale à la durée de transmission des premières informations.

2. Procédé selon la revendication 1, dans lequel
les premières informations sont en outre utilisées pour indiquer que le premier dispositif (130) a diffusé le message Wi-Fi.

3. Procédé selon l'une quelconque des revendications 1 à 2, dans lequel
les premières informations sont utilisées pour indiquer une ressource temps-fréquence du message Wi-Fi.

4. Procédé selon l'une quelconque des revendications 1 à 3, dans lequel l'envoi, par le premier dispositif (130), de premières informations à un troisième dispositif (150) comprend :
après que le premier dispositif (130) a diffusé le message Wi-Fi, l'envoi, par le premier dispositif (130), des premières informations au troisième dispositif (150) après la première durée réservée ;
dans lequel
la première durée réservée est supérieure ou égale à une somme d'une durée de transmission du message Wi-Fi et d'un premier retard de commutation, et le premier retard de commutation est un retard nécessaire au premier dispositif (130) pour commuter de la diffusion du message Wi-Fi vers l'envoi des premières informations.

5. Procédé selon l'une quelconque des revendications 1 à 4, dans lequel la diffusion, par le premier dispositif (130), du message Wi-Fi comprend :
après que le premier dispositif (130) a déterminé de diffuser le message Wi-Fi, la diffusion, par le premier dispositif (130), du message Wi-Fi après la seconde durée réservée ;
dans lequel
la seconde durée réservée est supérieure ou égale à un second retard de commutation, et le second retard de commutation est un retard nécessaire pour que le premier dispositif (130) commute vers la diffusion du message Wi-Fi.

6. Procédé d'évitement d'interférences entre systèmes, comprenant :
la réalisation (301a), par le premier dispositif (130), d'une détection de canal et/ou d'une évaluation de canal libre, CCA, pour mesurer la puissance d'interférence ;
la diffusion, par un premier dispositif (130), d'un message de fidélité sans fil, Wi-Fi, lorsque la puissance d'interférence satisfait à un seuil prédéfini, dans lequel le premier dispositif (130) réalise une communication en utilisant un premier système de communications, le premier système de communications est un système sans licence de liaison latérale, SL-U, un système nouvelle radio sans licence, NR-U ou un système d'accès assisté sous licence, LAA, le message Wi-Fi comprend des informations d'indication de durée, les informations d'indication de durée sont utilisées pour indiquer une première durée, la première durée est utilisée pour indiquer à un deuxième dispositif (140) de sauter l'occupation d'un premier canal dans la première durée, un spectre sur lequel se trouve le premier canal est un spectre sans licence, et le deuxième dispositif (140) est un dispositif qui réalise une communication en utilisant un système Wi-Fi ;
l'obtention, par le deuxième dispositif (140), du message Wi-Fi ;
l'envoi, par le premier dispositif (130), de premières informations à un troisième dispositif (150) en utilisant le premier système de communications, dans lequel les premières informations comprennent des données de service et/ou des informations de commande ; et
la réception, par le troisième dispositif (150), des premières informations provenant du premier dispositif (130) ;
dans lequel
la première durée est supérieure ou égale à la durée de transmission des premières informations.

7. Procédé selon la revendication 6, dans lequel
les premières informations sont en outre utilisées pour indiquer que le premier dispositif (130) a diffusé le message Wi-Fi.

8. Procédé selon l'une quelconque des revendications 6 à 7, dans lequel
les premières informations sont utilisées pour indiquer une ressource temps-fréquence du message Wi-Fi.

9. Procédé selon l'une quelconque des revendications 6 à 8, dans lequel l'envoi, par le premier dispositif (130), de premières informations à un troisième dispositif (150) comprend :
après que le premier dispositif (130) a diffusé le message Wi-Fi, l'envoi, par le premier dispositif (130), des premières informations au troisième dispositif (150) après la première durée réservée ;
dans lequel
la première durée réservée est supérieure ou égale à une somme d'une durée de transmission du message Wi-Fi et d'un premier retard de commutation, et le premier retard de commutation est un retard nécessaire au premier dispositif (130) pour commuter de la diffusion du message Wi-Fi vers l'envoi des premières informations.

10. Procédé selon l'une quelconque des revendications 6 à 9, dans lequel la diffusion, par le premier dispositif (130), du message Wi-Fi comprend :
après que le premier dispositif (130) a déterminé de diffuser le message Wi-Fi, la diffusion, par le premier dispositif (130). du message Wi-Fi après la seconde durée réservée ;
dans lequel
la seconde durée réservée est supérieure ou égale à un second retard de commutation, et le second retard de commutation est un retard nécessaire pour que le premier dispositif (130) commute vers la diffusion du message Wi-Fi.

11. Procédé selon l'une quelconque des revendications 6 à 10, dans lequel le troisième dispositif (150) détermine, sur la base des premières informations, la puissance d'interférence correspondant au troisième dispositif (150) et la puissance d'interférence correspondant au troisième dispositif (150) est une différence entre une puissance d'interférence initiale déterminée lorsque le troisième dispositif (150) réalise une détection de canal et/ou une évaluation de canal libre, CCA, et une puissance d'interférence correspondant au message Wi-Fi.

12. Premier dispositif (130). dans lequel le premier dispositif (130) comprend un ou plusieurs processeurs et un émetteur-récepteur, et le ou les processeurs et l'émetteur-récepteur prennent en charge le premier dispositif (130) dans la réalisation du procédé d'évitement d'interférences entre systèmes selon l'une quelconque des revendications 1 à 5. ou dans la réalisation d'une action réalisée par le premier dispositif (130) dans le procédé d'évitement d'interférences entre systèmes selon l'une quelconque des revendications 6 à 11.

13. Puce comprenant un circuit logique et une interface de communication, dans laquelle l'interface de communication est couplée au circuit logique, le circuit logique est configuré pour lire des instructions, pour réaliser le procédé d'évitement d'interférences entre systèmes selon l'une quelconque des revendications 1 à 5. ou réaliser une action réalisée par le premier dispositif (130) dans le procédé d'évitement d'interférences entre systèmes selon l'une quelconque des revendications 6 à 11, et l'interface de communication est configurée pour communiquer avec un autre module autre que la puce.
